(19) **Europäisches Patentamt**

**European Patent Office**

**Office européen des brevets**

(11) Veröffentlichungsnummer: **0 419 924 A1**

(12) **EUROPÄISCHE PATENTANMELDUNG**

(21) Anmeldenummer: **90117444.1**

(22) Anmeldetag: **11.09.90**

(51) Int. Cl.5: **B62D 5/04**

(30) Priorität: 23.09.89 DE 3931848

(43) Veröffentlichungstag der Anmeldung:
**03.04.91 Patentblatt  91/14**

(84) Benannte Vertragsstaaten:
**DE ES FR GB IT**

(71) Anmelder: **ROBERT BOSCH GMBH**
**Postfach 10 60 50**
**W-7000 Stuttgart 10(DE)**

(72) Erfinder: **Ahner, Peter, Dipl.-Ing.**
**Wiesenstrasse 25**
**W-7140 Ludwigsburg-Ossweil(DE)**
Erfinder: **Asch, Andreas, Dipl.-Ing.**
**Hospitalstrasse 7**
**W-7140 Ludwigsburg(DE)**
Erfinder: **Schieber, Dieter, Dipl.-Ing. (FH)**
**Lerschenstrasse 28**
**W-7101 Untereisesheim(DE)**
Erfinder: **Schustek, Siegfried, Dr. Ing.**
**Groeninger Strasse 48**
**W-7257 Ditzingen(DE)**
Erfinder: **Toberer, Horst, Dipl.-Ing. (FH)**
**Falkenstrasse 25**
**W-7132 Illingen(DE)**
Erfinder: **Breitfeld, Detlef, Dr. Ing.**
**Kelternstrasse 12**
**W-7400 Tuebingen(DE)**
Erfinder: **Kleindieck, Peter, Dipl.-Ing. (FH)**
**Hoelderlinstrasse 21**
**W-7141 Grossbottwar(DE)**

(54) **Servolenkung für Fahrzeuge.**

(57) Eine preiswerte Servolenkung mit hoher Eigensicherheit für Fahrzeuge mit einem Leergewicht unter 1000 kg weist einen reversiblen elektrischen Servomotor (16) auf, der ein eine Drehbewegung am Lenkrad unterstützendes Drehmoment am Lenkgetriebe erzeugt. Lenksäule (10) und Eingangswelle (11) des Lenkgetriebes sind derart miteinander gekoppelt, daß nur eine begrenzte Relativverdrehung beider zueinander zugelassen ist, die von einem Sensor (40) erfaßt wird. Eine Steuerschaltung (50) steuert das vom Servomotor (16) abgegebene Drehmoment in Abhängigkeit von dem Sensorsignal des Sensors (40). Im Kraftfluß zwischen Servomotor (16) und Eingangswelle (11) des Lenkgetriebes ist ein bidirektionaler Freilauf (20) angeordnet, der von der Lenksäule (10) gesteuert wird. Bei Relativverdrehung der Lenksäule (10) gegenüber der Eingangswelle (11) des Lenkgetriebes stellt der Freilauf (20) eine Drehverbindung zwischen Servomotor (16) und Eingangswelle (11) in beiden Drehrichtungen her.

Fig. 1

## SERVOLENKUNG FÜR FAHRZEUGE

### Stand der Technik

Die Erfindung betrifft eine Servolenkung für Fahrzeuge der im Oberbegriff des Anspruchs 1 definierten Gattung.

Servolenkungen oder Fahrzeuglenkungen mit Lenkhilfen haben eine motorische Lenkkraftunterstützung und tragen damit wesentlich zur Verbesserung des Fahrkomforts bei. Sie werden mit allen Lenkungsarten der Fahrzeuglenkung, wie Zahnstangenlenkung, Schneckenlenkung, Spindellenkung oder Kugelumlauflenkung, realisiert. Die meisten Servolenkungen arbeiten hydraulisch mit eigener Förderpumpe, deren Förderstrom symmetrisch auf die beiden Seiten eines Arbeitszylinders verteilt ist. Eine beim Lenken entstehende Druckdifferenz erzeugt ein proportionales Drehmoment an dem Lenkgetriebe, z.B. an der Schnecke oder Spindel, und damit an der Lenksäule.

Es sind auch schon rein elektrische Servolenkungen bekannt, bei denen das die Lenkung unterstützende Drehmoment an Getriebe und Lenksäule durch einen ständig in Eingriff stehenden elektrischen Servomotor aufgebracht wird. Diese Servolenkungen arbeiten nach dem Prinzip der sog. Nachlaufsteuerung.

Bei einer bereits vorgeschlagenen Servolenkung mit elektrischem Servomotor (P 38 24 424.1 sind zwei zur Lenksäule koaxiale, vom Servomotor angetriebene und zueinander gegensinnig rotierende Bremsscheiben vorgesehen, von denen jeweils eine in eine der beiden Drehrichtungen der Lenksäule umläuft. Eine wahlweise auf eine der Bremsscheiben wirkende Bremsvorrichtung erzeugt ein Bremsmoment in Abhängigkeit von dem an der Lenksäule wirksamen Drehmoment, und zwar an der in wirkrichtung dieses Drehmoments umlaufenden Bremsscheibe. Durch dieses Bremsmoment dreht sich das Bremsgehäuse gegenüber dem Servomotor in gleiche Richtung wie das Lenkrad bzw. die Lenksäule. Diese gleichgerichtete Drehmoment wird auf die Lenksäule übertragen und unterstützt deren Drehbewegung. Lenksäule und Lenkgetriebe sind durch einen Torsionsstab fest miteinander verbunden. Eine solche Servolenkung hat den Vorteil, daß sie als rein elektrische Servolenkung kompakt, weitgehend verschleißfrei und montagefreundlich ist und bei Defekt des Servomotors mit noch erträglichem Kraftaufwand gelenkt werden kann.

### Vorteile der Erfindung

Die erfindungsgemäße Servolenkung mit den kennzeichnenden Merkmalen des Anspruchs 1 hat neben diesen den elektrischen Servolenkungen anhaftenden Vorteilen noch den zusätzlichen Vorteil, kostengünstig und weitgehend eigensicher zu sein und für Fahrzeuge unter 1000 kg Leergewicht eine wesentliche Steigerung des Lenkkomforts zu gewährleisten, so daß sie besonders für Klein- und Mittelklassewagen geeignet ist.

Die Eigensicherheit der Servolenkung wird durch den Freilauf gewährleistet, der eine unerwünschte Lenkbewegung verhindert, wenn der Servomotor durch einen Fehler ungewollt aktiviert wird oder zu schnell läuft. In diesen Fällen wird der Freilauf wirksam und öffnet die drehfeste Kopplung zwischen Lenksäule und Eingangswelle des Lenkgetriebes, da sich dann die für die Kopplung erforderliche Relativverdrehung der Lenksäule gegenüber der Eingangswelle des Lenkgetriebes reduziert. Im Falle eines Blockierens des Servomotors oder bei Reißbewegungen am Lenkrad läßt sich das Fahrzeug mit erträglichem Kraftaufwand lenken, da sich die Reibmomente im Lenkgetriebe lediglich verdoppeln.

Durch die in den weiteren Ansprüchen 2 - 31 aufgeführten Maßnahmen sind vorteilhafte Weiterbildungen und Verbesserungen der im Anspruch 1 angegebenen Servolenkung möglich.

Gemäß einer bevorzugten Ausführungsform der Erfindung weist der Freilauf ein mit der Abtriebswelle des Servomotors gekoppeltes treibendes Teil, ein mit der Eingangswelle des Lenkgetriebes gekoppeltes angetriebenes Teil und ein mit der Lenksäule gekoppeltes Steuerteil auf. Dabei ist der Freilauf derart ausgebildet, daß das Steuerteil bei Drehbewegung der Lenksäule solange eine drehfeste Verbindung zwischen dem treibenden und dem angetriebenen Teil herstellt, wie das treibende Teil nicht schneller dreht als das der Drehbewegung der Lenksäule folgende Steuerteil. Das treibende Teil wird von einem Außenring mit einem Außenzahnkranz gebildet, der mit einem von der Abtriebswelle des Servomotors angetriebenen Untersetzungsgetriebe kämmt. Das angetriebene Teil wird von einem dazu koaxialen Innenring gebildet, der drehfest mit der Eingangswelle des Lenkgetriebes verbunden ist. Die Kopplung beider erfolgt durch Rollen, die in Ausnehmungen im Innenring einliegen und sich am Außenring abstützen. Die Rollen sind in einem Steuerkäfig geführt und können von diesem in Umfangsrichtung verschoben werden, so daß sich eine Freilauf- oder Klemmwirkung zwischen Innen- und Außenring einstellt.

Wird gemäß einer weiteren Ausführungsform der Erfindung der Außenring in Radialrichtung zweiteilig ausgebildet und beide Ringteile durch einen elastischen Zwischenring miteinander verbunden, so läßt sich eine Radialelastizität des mit dem Untersetzungsgetriebe kämmenden Außenrings von 0 - 0,3 mm herstellen. Dadurch kann zum einen Fertigungsspiel ausgeglichen werden und zum andern eine radiale Verspannung der miteinander kämmenden Zahnräder erreicht werden. Gegenüber in Umfangsrichtung verspannten, in axialer Richtung geteilten Zahnrädern ergibt sich ein axial deutlich kürzeres Zahnrad mit in beiden Drehrichtungen gleicher Steifigkeit. Neben Lose läßt sich auf diese Weise auch die Geräuschentstehung durch Zahnflankenwechsel vermeiden. Die dem Zwischenring eigene tangentiale Elastizität ermöglicht zusätzlich eine Dämpfung.

Werden gemäß einer bevorzugten Ausführungsform der Erfindung die am elastischen Ring anliegenden Flächen der Ringteile grob gezahnt ausgebildet, so wird je nach Erfordernis eine gezielte Steuerung der radialen und tangentialen Elastizität des Außenrings ermöglicht.

Wird gemäß einer weiteren Ausführungsform der Erfindung die Kopplung von Lenksäule und Eingangswelle des Lenkgetriebes durch ein relativ steifes Verdrehglied mit starker Progression hergestellt, so ist eine nur geringfügig weichere Lenksäule als bei konventionellen Lenkungen ohne Servounterstützung gegeben. Durch die starke Progression läßt sich ein sanfter Anschlag bei maximalem Verdrehwinkel erreichen. Als Verdrehglied kann ein Torsionsstab mit zusätzlicher Anlaufkulisse oder ein zur Lenksäule und Eingangswelle koaxialer Biegering, der an in Umfangsrichtung mit Spaltabstand nebeneinander angeordneten abwechselnd mit der Lenksäule und der Eingangswelle drehfest verbundenen Segmenten befestigt ist, oder eine ringförmige Anordnung von Schraubendruckfedern verwendet werden, die sich einerseits an einem mit der Lenksäule drehfest verbundene Tragteil und andererseits an einem mit der Eingangswelle drehfest verbundenen Tragteil abstützen.

Gemäß einer bevorzugten Ausführungsform der Erfindung ist der Servomotor ein im Brückenzweig einer Brückenschaltung angeordneter Gleichstrommotor. In jedem Brückenzweig ist ein steuerbarer Schalter angeordnet, wobei jeweils die beiden in der Brückenschaltung einander diagonal gegenüberliegenden Schalter zum Schließen und öffnen gleichzeitig angesteuert werden. Das Ansteuersignal zum Schließen der Schalter wird aus der Verdrehrichtung der Lenksäule abgeleitet. Die Schalter können als steuerbare Halbleiterschalter oder als mechanisch oder elektrisch betätigte mechanische Schaltkontakte ausgebildet werden. Im letzten Fall erfolgt das Steuern der Schaltkontakte durch eine Schaltkontaktbetätigungsvorrichtung, die abhängig von der Richtung der Relativverdrehung zwischen Lenksäule und Eingangswelle jeweils zugleich zwei der Schaltkontakte schließt und in der Nullstellung der Relativverdrehung alle Schaltkontakte öffnet. Zur Drehmomentsteuerung des Gleichstrommotors in Abhängigkeit von dem für den Betrag der Relativverdrehung zwischen Lenksäule und Eingangswelle des Lenkgetriebes repräsentativen Sensorsignal ist in Reihe mit der kontaktbestückten Brückenschaltung ein steuerbarer Halbleiter angeordnet, der mit einem Tastverhältnis angesteuert wird, das von dem Amplitudenbetrag des Sensorsignals bestimmt ist. Bei Ausbildung der Schalter der Brückenschaltung als Halbleiterschalter kann für die Drehmomentsteuerung jeweils ein Halbleiterschalter in einem der beiden Brückenzweige verwendet werden.

Gemäß einer bevorzugten Ausführungsform der Erfindung ist in Reihe mit der Brückenschaltung der Schaltkontakt eines Hauptrelais angeordnet, das nur unterhalb eines Vorgabewertes der Fahrzeuggeschwindigkeit schließt. Damit wird die Lenkkraftunterstützung durch den Servomotor ab einer Geschwindigkeitsschranke passiviert. Dadurch ist die Lenkunterstützung beim Parkieren, beim Rückwärtsfahren und bei geringer Fahrgeschwindigkeit, wo diese hauptsächlich benötigt wird, sichergestellt und im Bereich hoher Fahrgeschwindigkeit eine mechanische Lenkung mit hoher Steifigkeit der Lenksäule gewährleistet.

Wird gemäß einer weiteren Ausführungsform der Erfindung noch eine Gangerkennung für den ersten Gang, Rückwärtsgang oder für die Leerlaufstellung des Schalthebels vorgesehen und das Hauptrelais zusätzlich von der Gangerkennung angesteuert, so wird eine zusätzliche Sicherheit für den Fall des Ausfalls der Geschwindigkeitserkennung gewonnen.

Die erfindungsgemäße Servolenkung mit den kennzeichnenden Merkmalen des Anspruchs 32 hat den Vorteil, ein kostengünstiges eigensicheres Lenkhilfeaggregat zu sein, das den Bedienungsfomfort in kleineren Personenkraftwagen bis zu 1000 kg wesentlich steigert. Es ist inbesondere als Parkierhilfe für Geschwindigkeiten unter 15 km/h geeignet, läßt sich aber auch bei relativ steifer Ausbildung des Lenksäule und Eingangswelle des Lenkgetriebes miteinander verbindenden Verdrehglieds als Lenkhilfe über den eigentlichen Parkierbereich hinaus einsetzen.

Durch die in den weiteren Ansprüchen 33 - 53 aufgeführten Maßnahmen sind vorteilhafte Weiterbildungen und Verbesserungen der im Anspruch 32 angegebenen Servolenkung möglich.

Gemäß einer bevorzugten Ausführungsform der Erfindung besteht die Schlupfkupplung aus zwei in inversen Drehrichtungen vom Servomotor angetriebenen Kupplungsscheiben und einem zwischen diesen drehbar angeordneten Gegenkupplungsteil, das mit der Eingangswelle des Lenkgetriebes über ein ein- oder mehrstufiges Vorgelege verbunden ist.

Die Schlupfkupplung kann elektromagnetisch oder rein mechanisch betätigt als Friktionskupplung ausgebildet sein. Im ersten Fall werden die Erregerwicklungen von einer Steuerschaltung in Abhängigkeit von der elektrisch erfaßten (z.B. durch einen Wirbelstromsensor) Relativverdrehung zwischen Lenksäule und Lenkgetriebe-Eingangswelle angesteuert. Je nach Richtung der Relativverdrehung wird die eine oder andere Kupplungsscheibe gegen das Gegenkupplungsteil gepreßt und dadurch die Lenkgetriebe-Eingangswelle von dem Servomotor angetrieben. Der dabei zwischen Kupplungsscheibe und Gegenkupplungsteil auftretende Schlupf ist abhängig vom Betrag der Relativverdrehung zwischen Lenksäule und Lenkgetriebe-Eingangswelle, so daß vom Servomotor ein von der Größe dieser Relativverdrehung abhängiges, die Lenkbewegung unterstützendes Drehmoment in die Lenkgetriebe-Eingangswelle eingeleitet wird. Der Vorteil der Elektrokupplung besteht in der Möglichkeit, ein sanftes Einsetzen und ein sanftes Ausschalten der Lenkkraftunterstützung bei Erreichen der Geschwindigkeitsschranke zu erzielen. Ein Freilauf zur Vermeidung einer Behinderung des Fahrers bei Reißbewegungen am Lenkrad läßt sich in einfacher Weise auf elektronischem Weg realisieren, indem bei raschen Signaländerungen am Wirbelstromsensor, z.B. durch Reißen an der Lenksäule verursacht, eine Passivierung der Kupplung herbeigeführt wird. Die Elektrokupplung muß nur für das maximal zulässige Motormoment ausgelegt werden und kann daher sehr klein bauen. Die Erregerwicklungen können entweder mit dem Gegenkupplungsteil umlaufen, wobei der Erregerstrom über Schleifringe zugeführt wird, oder schleifringlos feststehend angeordnet werden. Letzteres erfordert einen geringfügig größeren Bauraum, bietet aber den Vorteil, daß verschleißbehaftete Schleifkontakte entfallen.

Bei der Ausbildung der Schlupfkupplung als mechanisch betätigte Friktionskupplung ist das Gegenkupplungsteil als drehbare und axial verschiebbare Scheibe ausgebildet, die von der Sensorrichtung je nach Richtung der Relativverdrehung zwischen Lenksäule und Lenkgetriebe-Eingangswelle an die eine oder andere Kupplungsscheibe angelegt wird, und zwar mit einer vom Betrag der Relativverdrehung abhängigen Anpreßkraft. Der zwischen den beiden Scheiben auftretende Schlupf und damit das vom Servomotor in die Eingangswelle des Lenkgetriebes eingeleitete unterstützende Drehmoment ist durch die Größe der Relativverdrehung der Lenksäule bestimmt. Die Sensorrichtung wird von einem Kugelgewindetrieb mit Steilgewinde oder einer ähnlichen Umlenkeinheit zum Umsetzen einer Dreh- in eine Axialbewegung gebildet.

Bei dieser rein mechanischen Ausbildung der beiden Servolenkungen wird zwischen dem Servomotor und den von diesem angetriebenen Kupplungsscheiben ein Freilauf, z.B. fliehkraftgesteuert, vorgesehen. Dieser läßt bei Reißbewegungen am Lenkrad ein Überholen des Servomotors zu und vermeidet eine Überlastung des Servomotors.

Bei beiden Schlupfkupplungen laufen die Kupplungsscheiben vorzugsweise in Öl. Um die dadurch bedingten Plantschverluste möglichst klein zu halten, ist es von Vorteil, gemäß einer weiteren Ausführungsform der Erfindung das Vorgelege nur einstufig auszuführen und den Servomotor in das Umlenkgetriebe eintreiben zu lassen. Dadurch ist bei Reißbewegungen am Lenkrad ein deutlich geringeres Widerstandsmoment vorhanden, was durch die geringen Plantschverluste und die geringen Massenträgheitsmomente erzielt wird. Bei Vorsehen eines Freilaufs ist es aus dem gleichen Grund vorteilhaft, den Freilauf in die beiden kleinen Zahnräder des Umlenkgetriebes zu verlegen und den Servomotor direkt in das Umlenkgetriebe eintreiben zu lassen.

Gemäß einer weiteren Ausführungsform der Erfindung ist die Schlupfkupplung als Umkehrreibradantrieb mit zwei in festem Abstand voneinander drehbar und axial verschiebbar angeordneten, miteinander starr verbundenen Reibscheiben und einem vom Servomotor angetriebenen Reibrad ausgebildet, das mit parallel zu den Reibscheiben sich erstreckender Rotationsachse zwischen den beiden Reibscheiben angeordnet ist. Die sensorvorrichtung wird von einer die Drehbewegung der Lenksäule relativ zur Lenkgetriebe-Eingangswelle in eine Axialverschiebung der Reibscheiben umsetzenden Umlenkeinheit gebildet, die je nach Richtung der Relativverdrehung der Lenksäule die Reibscheiben gemeinsam in die eine oder andere Axialrichtung verschiebt und eine Reibscheibe mit einer von der Größe der Relativverdrehung abhängigen Anpreßkraft an das Reibrad anpreßt.

Zur Kopplung von Lenksäule und Eingangswelle des Lenkgetriebes ist bei allen Ausführungsformen der Servolenkung ein Verdrehglied, beispielsweise ein einfacher Dreh- oder Torsionsstab, vorgesehen, der bei Passivierung der Servolenkung oberhalb der Geschwindigkeitsgrenze eine direkte Übertragung der Lenkkräfte von der Lenksäule zur Lenkgetriebe-Eingangswelle herstellt. Für die Funktion der mechanisch ausgebildeten Sensorrichtungen kann dieses nicht so steif ausgebildet werden, wie dies für eine direkte Lenkung wünschenswert ist. Daher kann gemäß einer bevorzugten Ausführungsform der Erfindung bei den Servolenkungen mit Friktionskupplung oder Umkehrreibantrieb eine Zentriervorrichtung vorgesehen werden, die oberhalb der Geschwindigkeitsschranke eine drehsteife Verbindung zwischen der Lenksäule und der Eingangswelle des Lenkgetriebes herstellt. Durch eine geeignete Ausbildung der Zentriervorrichtung kann ein sanftes Zu- und Abschalten der Lenkunterstützung bei Erreichen der Geschwindigkeitsschranke erreicht werden.

Zeichnung

Die Erfindung ist anhand von in der Zeichnung dargestellten Ausführungsbeispielen in der nachfolgenden Beschreibung näher erläutert. Es zeigen:
Fig. 1 ausschnittweise einen Längsschnitt einer Servolenkung für einen Personenkraftwagen,
Fig. 2 einen Schnitt längs der Linie II-II in Fig. 1,
Fig. 3 eine gleiche Darstellung wie in Fig. 2 einer modifizierten Servolenkung gemäß zweier Ausführungsbeispiele (links und rechts),
Fig. 4 ausschnittweise einen Längsschnitt einer Servolenkung gemäß einem zweiten Ausführungsbeispiel,
Fig. 5 einen Schnitt längs der Linie V-V in Fig. 4,
Fig. 6 und 7 jeweils ausschnittweise einen Längsschnitt einer Servolenkung gemäß einem dritten und vierten Ausführungsbeispiel,
Fig. 8 einen Schnitt längs der Linie VIII-VIII in Fig. 7,
Fig. 9 ein elektrisches Schaltbild der Servolenkung in Fig. 1,
Fig. 10 eine elektrisches Schaltbild der Servolenkung in Fig. 6.
Fig. 11 bis 13 jeweils ausschnittweise einen Längsschnitt einer Servolenkung gemäß einem fünften, sechsten und siebenten Ausführungsbeispiel,
Fig. 14 eine Draufsicht einer Zentriervorrichtung für die Servolenkung in Fig. 12,
Fig. 15 und 16 jeweils eine Draufsicht eines Freilaufs der Servolenkung in Fig. 12 oder 13 gemäß zweier Ausführungsbeispiele, teilweise geschnitten.

Beschreibung der Ausführungsbeispiele

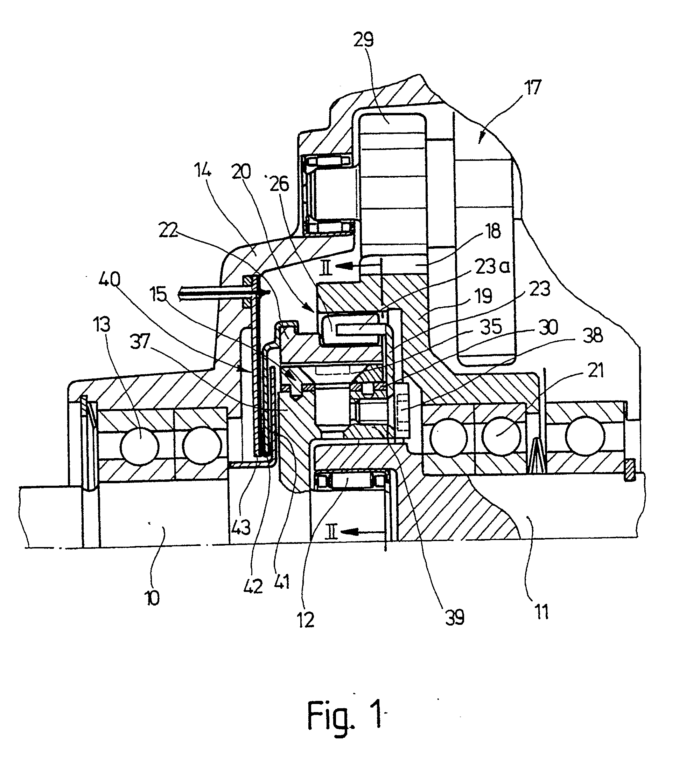

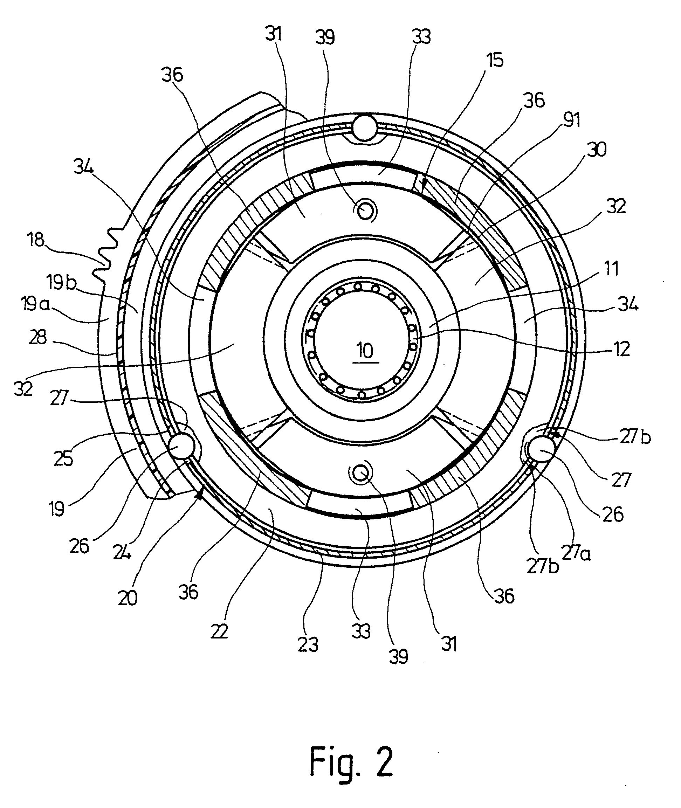

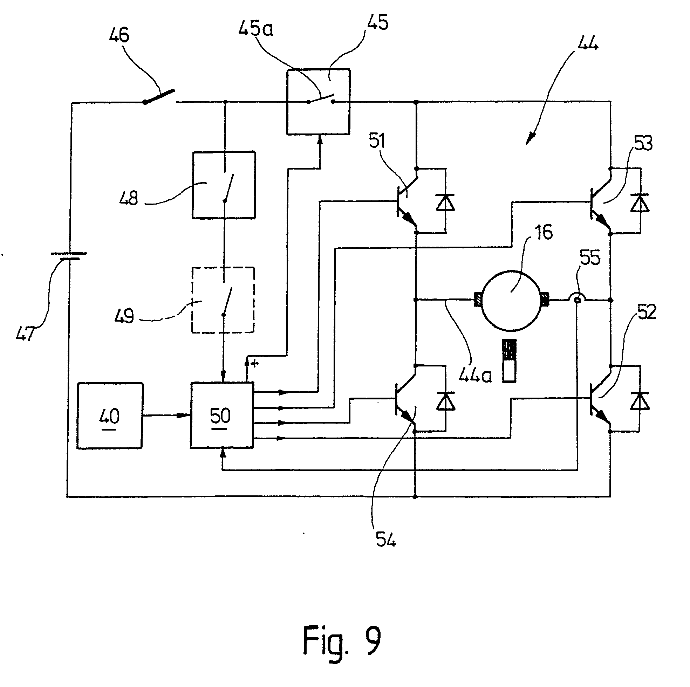

Die in Fig. 1 im Längsschnitt und nur ausschnittweise dargestellte Servolenkung weist eine Lenksäule 10 auf, an deren oberem Ende (Fig. 1 links) drehfest ein Lenkrad sitzt (nicht dargestellt). Axial fluchtend zur Lenksäule 10 ist eine Eingangswelle 11 eines nicht dargestellten Lenkgetriebes angeordnet, die sich endseitig über ein Nadellager 12 auf der Lenksäule 10 abstützt. Die Lenksäule ist mittels eines Kugellagers 13 um ihre Längsachse drehbar in einem Lenkgehäuse 14 gehalten. Lenksäule 10 und Eingangswelle 11 sind über ein relativ steifes Verdrehglied 15 mit hoher Progression miteinander gekoppelt, wodurch eine begrenzte Relativverdrehung zwischen Lenksäule 10 und Eingangswelle 11 ermöglicht wird. Ein als permanentmagneterregter Gleichstrommotor ausgebildeter reversibler elektrischer Servomotor 16 (Fig. 9) treibt über ein Untersetzungsgetriebe 17 einen mit einem Außenzahnkranz 18 versehenen Außenring 19 eines Freilaufs 20. Der Außenring 19 ist über ein Kugellager 21 auf der Eingangswelle 11 drehbar gelagert. Wie aus der Schnittdarstellung in Fig. 2 zu erkennen ist, besitzt der Freilauf 20 noch einen zum Außenring 19 koaxialen Innenring 22, der - wie im einzelnen noch beschrieben wird - drehfest mit der Eingangswelle 11 verbunden ist. Zwischen Außen- und Innenring 19,22 ist ein dazu koaxialer ringförmiger Steuerkäfig 23 angeordnet, der wie später noch im einzelnen beschrieben wird - drehfest mit der Lenksäule 10 verbunden ist. Der Steuerkäfig 23 greift mit Steuerschultern 24,25 in Umfangsrichtung gesehen vor und hinter jeweils eine Rolle 26, die in einer Ausnehmung 27 im Innenring 22 einliegt und sich zwischen Innenring 22 und Außenring 19 abstützt. Von den Rollen 26 und Ausnehmungen 27 sind jeweils drei vorgesehen, die um gleiche Winkel (1200) am Umfang versetzt angeordnet sind. Jede Ausnehmung 27 weist einen Mittelabschnitt 27a und zwei sich daran in Umfangsrichtung auf jeweils einer Seite anschließende Seitenabschnitte 27b auf, deren Tiefe sich zum Ende hin verjüngt. Solange die Rollen 26 im Mittelabschnitt 27a einliegen, kann sich der Außenring 19 relativ zum Innenring 22 frei drehen und sich dabei auf den Rollen 26 abwälzen. Dringen die Rollen 26 in jeweils einen der beiden Seitenabschnitte 27b ein, so erfolgt ein Klemmung zwischen Außenring 19 und Innenring 22, wodurch diese drehfest miteinander gekoppelt sind. Die Verschiebung der Rollen 26 wird über die Steuerschultern 24,25 von dem mit der Lenksäule 10 verbundenen Steuerkäfig 23 bewirkt.
Wie in Fig. 2 zusätzlich eingezeichnet ist, kann der Außenring 19 in Radialrichtung gesehen zweiteilig ausgebildet sein, wobei zwischen den beiden Ringteilen 19a und 19b eine elastische Zwischenschicht, hier als Zwischenring 28 ausgebildet, angeordnet ist. Die an dem elastischen Zwischenring 28 anliegenden Flächen der beiden Ringteile 19a und 19b sind grobgezahnt ausgebildet. Mit diesem üblicherweise aus einem Elastomer hergestellten Zwischenring 28 läßt sich eine Radialelastizität von 0 -0,3 mm erzielen, womit Fertigungsspiele ausgeglichen werden können. Die Tangentialelastizität des Zwischenringes 28 ermöglicht eine Dämpfung. Infolge der Radialelastizität läßt sich der Außenzahnkranz 18 des Außenrings 19 und das mit diesem kämmende Zahnrand 29 des Untersetzungsgetriebes 17 radial verspannen, wodurch neben Vermeidung einer Geräuschentstehung bei Zahnflankenwechsel sich auch ein in Axialrichtung deutlich schmaleres Zahnrad mit in beiden Drehrichtungen gleicher Steifigkeit bauen läßt. Auf den Zwischenring 28 kann jedoch verzichtet werden.

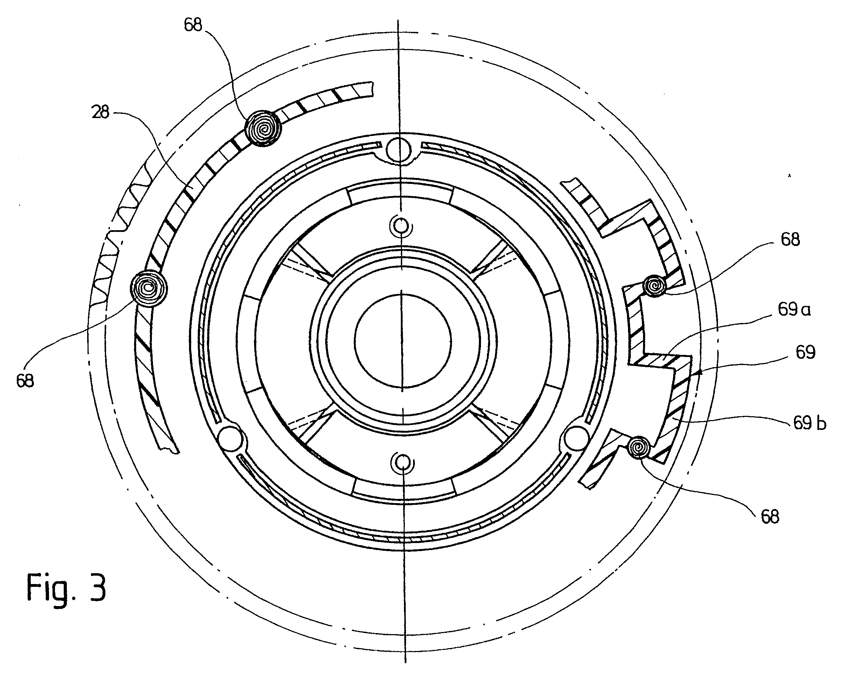

Da einige Elastomere, z.B. Naturkautschuk, eine geringe Formstabilität, insbesondere bei Erwärmung aufweisen, werden gemäß einer in Fig. 3, linke Hälfte, dargestellten Modifizierung der Servolenkung im Bereich des Zwischenrings 28 Spiral-Spannstifte 68 eingesetzt, welche die beiden koaxialen Ringteile 19a,19b des Außenrings 19 miteinander verbinden. Diese federnde Elemente sorgen für eine zusätzliche mechanische Abstützung und damit für eine geringere Beanspruchung des Zwischenrings 28 auf Scherung.

In der in Fig. 3 rechts dargestellten Modifizierung ist die elastische Zwischenschicht 69 mäanderförmig ausgebildet und weist wechselweise radial und in Umfangsrichtung verlaufende Schichtabschnitte 69a und 69b auf. Auch hier sind zur zusätzlichen mechanischen Abstützung federnde Elemente in Form von Spiral-Spannstiften 68 vorgesehen, die zweckmäßigerweise in den radial ausgerichteten Schichtabschnitten 69a liegen. Dadurch werden die Spiral-Spannstifte 68 vorwiegend auf Druck beansprucht und nicht auf Scherung und können somit dünner ausgeführt werden. Anstelle der Spiral-Spannstifte 68 können bei beiden in Fig. 3 dargestellten Ausführungsbeispielen auch andere Federelemente, wie z.B. Blattfedern, verwendet werden. Da im übrigen alle Bauteile in Fig. 3 mit denen in Fig. 2 übereinstimmen ist auf eine Bezeichnung dieser Bauteile mit Bezugszahlen verzichtet worden. Zum Verständnis wird auf Fig. 2 und die entsprechende Beschreibung verwiesen.

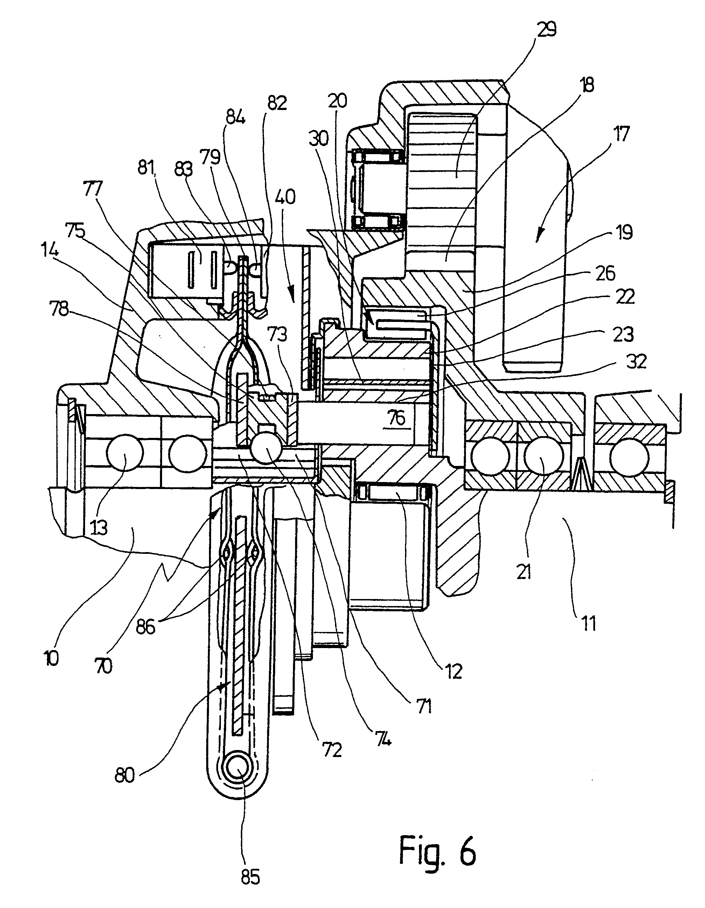

Bei der Servolenkung gemäß Fig. 1 und 2 weist das Verdrehglied 15 einen zur Lenksäule 10 und zur Eingangswelle 11 des Lenkgetriebes koaxialen Biegering 30 auf, der an in Umfangsrichtung mit Spaltabstand nebeneinander angeordneten Segmenten 31 und 32 befestigt ist. Die Befestigung erfolgt mittels Druckplatten 33 bzw. 34, deren in Umfangsrichtung sich erstreckende Abmessungen wesentlich kleiner sind als die der Segmente 31,32 und die mittels Senkkopfschrauben 35 (Fig. 1) auf die Segmente 31,32 aufgeschraubt sind. Der Biegering 30 wird zwischen den Druckplatten 33,34 und den Segmenten 31,32 verspannt. Die Segmente 31,32 sind am Außenumfang zu den Segmenträndern hin stärker gekrümmt, so daß im Randbereich der Segmente 31,32 zwischen dem Außenumfang der Segmente 31,32 und dem Biegering 30 ein zum Segmentrand hin sich vergrößerenden radialer Luftspalt 91 verbleibt. Zwischen den Druckplatten 33,34 stützen sich in Umfangsrichtung sich erstreckende Dämpfungselemente 36 ab. Wie insbesondere aus Fig. 1 ersichtlich ist, sind die Segmente 31 gemeinsam an einer an der Lenksäule 10 drehfest gehaltenen Trägerscheibe 37 befestigt, vorzugsweise sind sie einstückig mit dieser. Die eingangs erwähnte drehfeste Verbindung des ebenfalls scheibenförmigen Steuerkäfigs 23, der an axial wegstehenden Stegen 23a, die Steuerschultern 24,25 (Fig. 2) für die Rollen 26 trägt, erfolgt durch Schrauben 38, die in Gewindebohrungen 39 in den Segmenten 31 eingeschraubt sind. Wie aus Fig. 2 und auch aus Fig. 6 ersichtlich ist, sind die Segmente 32 einstückig mit der Eingangswelle 11 des Lenkgetriebes und mit dem Innenring 22 des Freilaufs 20 drehfest verbunden.

Im Lenkgehäuse 14 ist ein Sensor 40 vorgesehen, der eine Relativverdrehung zwischen der Lenksäule 10 und der Eingangswelle 11 sensiert und ein dieser Relativverdrehung proportionales Sensorsignal liefert. Der Sensor 40 ist im Ausführungsbeispiel der Fig. 1 als Wirbelstromsensor ausgebildet und besteht aus zwei gegeneinander verdrehbaren Schlitzscheiben 41,42, einer dazwischenliegenden, hier nicht dargestellten Gleitfolie und aus einer Trägerplatte 43, die mit gedruckten Spulen besetzt ist. Die Trägerplatte 43 ist am Lenkgehäuse 14, die Schlitzscheibe 41 an der Lenksäule 10 und die Schlitzscheibe 42 an dem Innenring 22 befestigt. Die Spulen sind von Wechselstrom durchflossen. Bei Verdrehung des Verdrehglieds 15 und der damit verbundenen Relativverdrehung von Lenksäule 10 und Eingangswelle 11 gegeneinander ergibt sich eine unterschiedliche Überdeckung der Schlitzscheiben 41,42 entsprechen dem Grad der Verdrehung. Dies führt zu einer mehr oder weniger großen Dämpfung des Sensorsignals, das damit ein Maß für die Verdrehung des Verdrehglieds 15 ist. Dieses Sensorsignal dient zur Steuerung des Drehmoments des Servomotors 16 in Abhängigkeit von der Größe der Relativverdrehung von Lenksäule 10 und Eingangswelle 11 des Lenkgetriebes.

In Fig. 9 ist der Schaltplan für den Servomotor 16 dargestellt. Der permanentmagneterregte Gleichstrommotor 16 mit Nebenschlußverhalten ist im Brückenzweig 44a einer Brückenschaltung 44 angeordnet, die in Reihe mit einem Schaltkontakt 45a eines nur schematisch dargestellten Hauptrelais 45 und dem Fahrschalter 46 des Fahrzeugs an der Fahrzeugbatterie 47 liegt. In der Brückenschaltung 44 sind vier steuerbare Schalter angeordnet, die hier als npn-Transistoren 51 - 54 ausgebildet sind. Die Basen der Transistoren 51 - 54 sind an einer Steuerschaltung 50 angeschlossen, der das Sensorsignal des Wirbelstromsensors 40, zugeführt ist. Aus dem Sensorsignal des Wirbelstromsensors 40 kann die Steuerschaltung 50 die Richtung der Verdrehung des Verdrehglieds 15 erkennen und steuert entsprechend der Verdrehrichtung entweder die Transistoren 51 und 52 oder die Transistoren 53 und 54 gleichzeitig an, so daß der Servomotor 16 in die gleiche Drehrichtung dreht wie das Verdrehglied 15 verdreht ist. Dabei wird der Transistor 52 bzw. 54 voll geöffnet, während der Transistor 51 bzw. 53 mit einem Tastverhältnis t/T angesteuert wird, das vom Amplitudenbetrag des Sensorsignals bestimmt ist und das proportional der Größe der Verdrehung des Verdrehglieds 15 ist oder umgekehrt. Mittels eines Sensors 55 im Brückenzweig 44a der Brückenschaltung 44 wird das Tastverhältnis t/T erfaßt und an die Steuerschaltung 50 gemeldet. Diese steuert das Hauptrelais 45 in einer solchen Weise an, daß der Relaisschaltkontakt 45a geschlossen ist, solange das Tastverhältnis t/T<0,95 ist, und öffnet, sobald dieser Wert überschritten wird. Zusätzlich ist noch ein Sensor 48 zur Erfassung der Fahrzeuggeschwindigkeit vorgesehen. Solange die Fahrzeuggeschwindigkeit unter einem vorgegebenen Wert liegt, gibt der Sensor 48 ein entsprechendes Signal an die Steuerschaltung 50. Bei Anliegen dieses Signals ist die Steuerschaltung 50 aktiviert. Sie wird passiviert - und damit der Servomotor 16 durch Öffnen des Hauptrelais 45 stillgesetzt -, wenn die Fahrzeuggeschwindigkeit den vorgegebenen Betrag überschreitet. Wie in Fig. 9 strichliniert angedeutet ist, kann zusätzlich noch ein Sensor 49 zur Gangerkennung vorgesehen werden. Dieser gibt ein Aktivierungssignal an die Steuerschaltung 50 nur dann, wenn er Leerlaufstellung des Schalthebels oder eingelegten ersten Vorwärtsgang oder eingelegten Rückwärtsgang sensiert. Die Aktivierungssignale von Sensor 48 und 49 sind logisch "und"-verknüpft, so daß die Steuerschaltung 50 das Hauptrelais 45 nur dann schließen kann, wenn beide Aktivierungssignale vorhanden sind.

Die Wirkungsweise der beschriebenen Servolenkung ist wie folgt:

Ist der Fahrschalter 46 geschlossen, steht das Fahrzeug oder wird es mit geringer Fahrgeschwindigkeit bewegt, und ist entweder der erste Vorwärtsgang oder der Rückwärtsgang eingelegt oder steht der Schalthebel in Leerlaufstellung, so wird von der Steuerschaltung 50 das Hauptrelais 45 angesteuert und der Relaisschaltkontakt 45a schließt. Damit ist die Brückenschaltung 44 an die Fahrzeugbatterie 47 gelegt.

Wird nunmehr am Lenkrad eine Lenkbewegung durchgeführt, so wird die Lenksäule 10 in die eine oder andere Richtung verdreht. Bei zunächst feststehender Eingangswelle 11 des Lenkgetriebes wird das Verdrehglied 15 entsprechend verdreht. Diese Verdrehung des Verdrehglieds 15 wird von dem Wirbelstromsensor 40 erfaßt und als Sensorsignal der Steuerschaltung 50 zugeführt. Diese steuert entsprechend der Drehrichtung der Lenksäule 10 entweder die Transistoren 51 und 52 oder die Transistoren 53 und 54 an, so daß der Servomotor 16 in die gleiche Drehrichtung zu laufen beginnt, in welcher auch die Lenksäule 10 gedreht worden ist.

Während der Transistor 52 bzw. der Transistor 54 voll aufgesteuert wird, liegen am Transistor 51 bzw. 53 Steuerimpulse mit einem vom Sensorsignal bestimmten Tastverhältnis oder umgekehrt. Dadurch wird der Motorstrom entsprechend eingestellt, und der Servomotor 16 liefert an seiner Abtriebswelle ein der Verdrehung des Verdrehgliedes 15 proportionales Drehmoment.

Die Abtriebswelle des Servomotors 16 treibt über das Untersetzungsgetriebe 17 den Außenring 19 des Freilaufs 20 an. Ist beispielsweise über die Lenksäule 10 eine Verdrehung des Verdrehglieds 15 im Uhrzeigersinn erfolgt, so wird der Außenring 19 des Freilaufs 20 ebenfalls im Uhrzeigersinn angetrieben (Fig. 1). Bei der Verdrehung der Lenksäule 10 im Uhrzeigersinn dreht auch der Steuerkäfig 23 im Uhrzeigersinn, wodurch die Steuerschultern 25 des Steuerkäfigs 23 die Rollen 26 freigeben. Durch den drehenden Außenring 19 werden nunmehr die Rollen 26 in die sich verjüngenden Seitenabschnitte 27b der Ausnehmungen 27 hineingezogen, wo sie sich zwischen Innenring 22 und Außenring 19 verklemmen und somit einen Kraftfluß vom Servomotor 16 über das Untersetzungsgetriebe 17, den Außenring 19 und den Innenring 22 zur Eingangswelle 11 des Lenkgetriebes ermöglichen. Wird nunmehr durch Drehen des Lenkrades und damit der Lenksäule 10 gegen Uhrzeigersinn die Verdrehung des Verdrehglieds 15 zurückgenommen, so wird durch das sich reduzierende Sensorsignal von der Steuerschaltung 50 auch die Ansteuerung des Servomotors 16 zurückgenommen. In der Nähe der Nullage des Verdrehglieds 15, bei welcher keine Verdrehung des Verdrehglieds 15 besteht, werden die Rollen 26 durch die Steuerschultern 25 des Steuerkäfigs 23 aus den Seitenabschnitten 27b der Ausnehmungen 27 herausgeschoben und in den Mittelabschnitten 27a gehalten.

Wird der Servomotor 16 infolge eines Versagens der Steuerschaltung 50 oder eines der paarweise angesteuerten Transistoren 51,52 bzw. 53,54 voll angesteuert, so kommt es zu einem Überholen des Innenrings 22 durch den vom Servomotor 16 angetriebenen Außenring 19. In diesem Fall werden ebenfalls die Rollen 26 von den Steuerschultern 25 (bzw. 26 bei Drehung gegen Uhrzeigersinn) in den Mittelabschnitt 27a der Ausnehmungen 27 gehalten. Damit kann sich der Außenring 19 bei stehendem Innenring 22 frei drehen. Der Freilauf 20 ist wirksam und eine Beeinflussung der Eingangswelle 11 des Lenkgetriebes ausgeschlossen, so daß die Gefahr einer Eigenlenkung zuverlässig ausgeschlossen ist.

Bei defektem Servomotor 16, d.h. bei stehendem oder gar festgebremstem Außenring 19, oder bei hohen Lenkmomentanforderungen bei passivierter Lenkhilfe, d.h. bei durch das Hauptrelais 45 abgeschaltetem Servomotor 16, werden z.B. bei Drehen der Lenksäule 10 im Uhrzeigersinn die Rollen 26 von den Steuerschultern 24 in die Seitenabschnitte 27b der Ausnehmungen 27 hineingedrückt. Wegen des stehenden Außenrings 19 kann jedoch keine Selbsthemmung sondern nur ein geringes zusätzliches Reibmoment entstehen. Die Lenkung erfolgt mit erträglichem Kraftaufwand auf direktem Wege von Lenksäule 10 über das Verdrehglied 15 zur Eingangswelle 11.

Die beschriebene Servolenkung ist wirksam als Parkierhilfe oder als Lenkhilfe bei kleinen Fahrzeuggeschwindigkeiten. Sobald der zweite Gang eingelegt wird oder die Fahrzeuggeschwindigkeit die vorgegebene Geschwindigkeitsschwelle übersteigt, wird von der Steuerschaltung 50 die Ansteuerung des Hauptrelais 45 abgebrochen und der Relaisschaltkontakt 45a öffnet. Damit ist die Servolenkung abgeschaltet. Die Lenkung bei höheren Geschwindigkeiten erfolgt nunmehr direkt von Lenksäule 10 über das Verdrehglied 15 auf die Eingangswelle 11. Durch das relativ steife Verdrehglied 15 mit starker Progression braucht oberhalb der vorgegebenen Geschwindigkeitsschranke keine Beeinträchtigung der mechanischen Lenkung in Kauf genommen zu werden. Die Steifigkeit der Lenksäule entspricht in etwa der von Kraftfahrzeugen ohne Servolenkung. Die Abschaltung des Hauptrelais 45 und das damit verbundene Öffnen des Relaisschaltkontaktes 45a ist eine zusätzliche Sicherung, wenn infolge eines defekten Transistors 51 oder 53 der Motorstrom eine bestimmte Größe übersteigt und damit die Gefahr des Überdrehens der Servolenkung besteht.

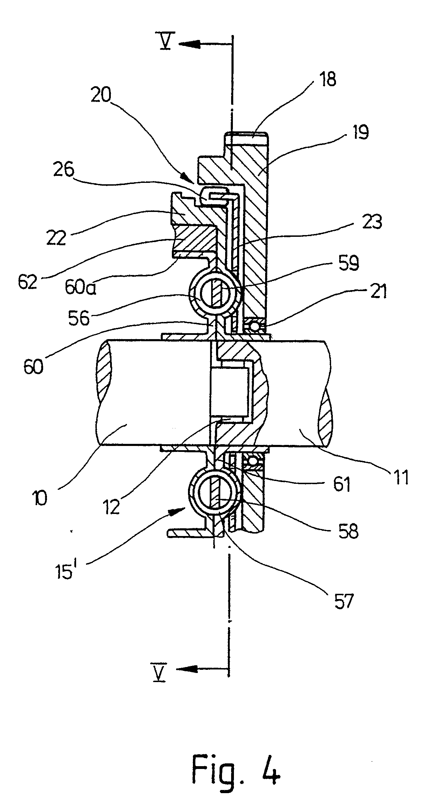

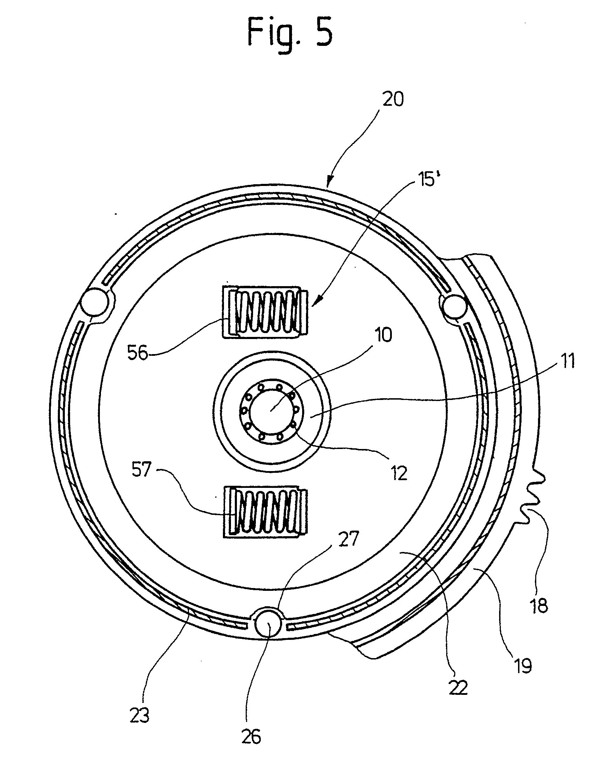

Bei dem in Fig. 4 und 5 auschnittweise dargestellten Ausführungsbeispiel einer Servolenkung ist gegenüber der Servolenkung gemäß Fig. 1 und 2 das Verdrehglied 15' modifiziert. Es wird hier von zwei Schraubendruckfedern 55,56 gebildet, die sich an der Achse der Lenksäule 10 bzw. der Eingangswelle 11 diametral mit parallelen Federachsen gegenüberliegen und gegeneinander wirken. Die Zahl der Schraubendruckfedern kann erhöht werden und beispielsweise vier oder sechs betragen, so daß sich immer gegeneinander wirkende Schraubendruckfedern paarweise gegenüberliegen. Die beiden Schraubendruckfedern 56,57 stützen sich an Zapfen 58,59 ab, die an scheibenförmigen Tragteilen 60 bzw. 61 angespritzt sind. Das Tragteil 60 ist drehfest mit der Lenksäule 10 und das Tragteil 61 drehfest mit der Eingangswelle 11 des Lenkgetriebes verbunden. Die Zapfen 58 sind an das Tragteil 60 und die Zapfen 59 an das Tragteil 61 angespritzt. Jeweils ein Zapfen 58 des Tragteils 60 und ein Zapfen 59 des Tragteils 61 nehmen eine Schraubendruckfeder 56 bzw. 57 auf. Um ein Ausweichen der Schraubendruckfedern 56,57 quer zu ihrer Wirkrichtung zu vermeiden, sind die Tragteile 60,61 im Bereich der Schraubendruckfedern 56,57 halbschalenförmig ausgewölbt, so daß sie zusammen die Schraubendruckfedern 56,57 über deren Längserstreckung taschenförmig umschließen. Durch geeignete Gestaltung der Steigung der Schraubendruckfedern 56,57 läßt sich die gewünschte Progression des Verdrehglieds 115 einstellen. Mit dem Tragteil 61 ist der Innenring 22 des Freilaufs 20 drehfest verbunden, während der Steuerkäfig 23 des Freilaufs mit dem Tragteil 60 in drehfester Verbindung steht. Zwischen dem äußeren Rand 60a des topfförmig ausgebildeten Tragteils 60 und dem dazu koaxialen Innenring 22 des Freilaufs 20 ist ein Dämpfungsring 62, z.B. aus Gummi, eingebettet. Im übrigen ist der Aufbau des Freilaufs 20 identisch wie zu Fig. 1 und 2 beschrieben.

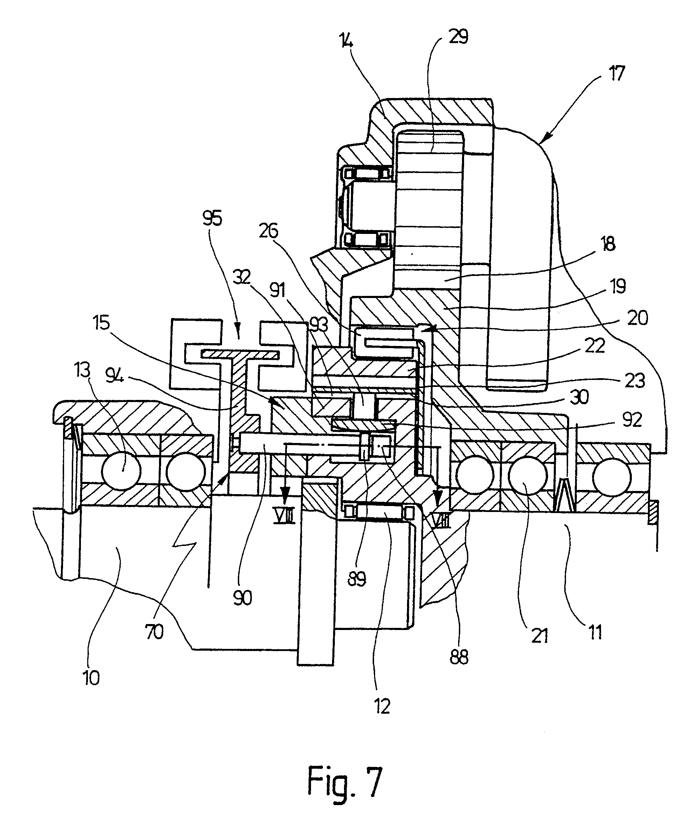

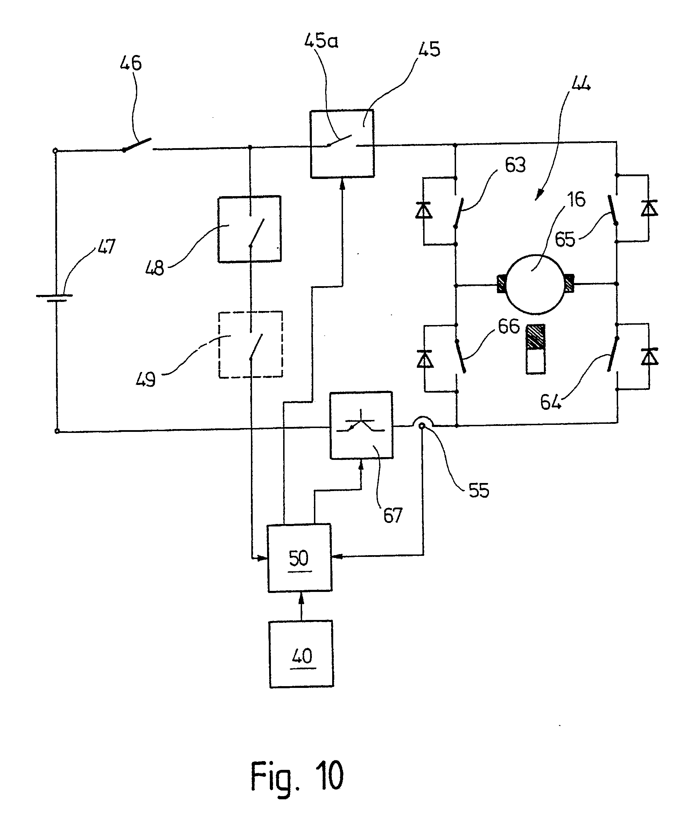

In Fig. 10 ist der elektrische Schaltplan eines weiteren Ausführungsbeispiels einer Servolenkung dargestellt. Diese unterscheidet sich von den vorstehend beschriebenen Servolenkungen dadurch, daß die Schalter in der Brückenschaltung 44 des Gleichstrommotors 60 als mechanische Schaltkontakte 63 - 66 ausgebildet sind. Diese mechanischen Schaltkontakte 63 - 66 werden von einer Schaltkontaktbetätigungsvorrichtung 70 geschaltet, wie sie in Fig. 6 oder 7 dargestellt ist. Prinzipiell arbeitet diese so, daß abhängig von der Richtung der Relativverdrehung zwischen Lenksäule 10 und Eingangswelle 11 des Lenkgetriebes immer die in der Brückenschaltung 44 diagonal gegenüberliegenden Schaltkontakte 63,64, bzw. 65,66 geschlossen werden. In der Nullstellung der Relativverdrehung zwischen Lenksäule 10 und Eingangswelle 11, also Relativverdrehung Null zwischen beiden, sind alle Schaltkontakte 63 - 66 geöffnet. In Reihe mit der Brückenschaltung 44 ist ein steuerbarer Halbleiter, z.B. ein Transistor 67 angeordnet, der von der Steuerschaltung 50 wiederum mit einem Tastverhältnis t/T angesteuert wird, das von dem Amplitudenbetrag des Sensorsignals bestimmt ist. Zusätzlich ist die Steuerschaltung 50 so ausgebildet, daß sie bei Unter- oder Überschreiten des Vorgabewerts für die Fahrzeuggeschwindigkeit, was zu einem Zu- bzw. Abschalten des Servomotors 16 durch das Hauptrelais 45 führt, die jeweiligen Schaltkontakte 63 - 66 bzw. den Transistor 67 über eine sog. Rampe mit zunehmender Steuerspannung zeitverzögert bzw. mit abnehmender Steuerspannung mit geringer Zeitverzögerung bei geringem Zeitvorlauf gegenüber dem Hauptrelais 45 ansteuert. Die Zeitverzögerung bzw. der Zeitvorlauf beträgt nur wenige Millisekunden. Auf diese Weise wird beim Schließen bzw. Öffnen des Hauptrelais 45 nicht die volle Batteriespannung an den Servomotor 16 gelegt bzw. von dem Servomotor 16 weggeschaltet, so daß die Aktivierung bzw. Passivierung der Servolenkung sanft erfolgt. Damit ist auch der bei Aktivierung der Servolenkung störende Effekt des plötzlichen und für den Fahrer unerwarteten Abfalls der Lenkkräfte beseitigt, der vor allem bei langsamem Kurvenfahren zu einer Irritation des Fahrer führen könnte. Im übrigen stimmen alle Bauteile im Schaltplan der Fig. 10 mit denen in Fig. 9 überein, so daß sie mit gleichen Bezugszeichen versehen sind.

Ein Ausführungsbeispiel der Schaltkontaktbetätigungsvorrichtung 70 ist in der in Fig. 6 im Längsschnitt dargestellten Servolenkung zu sehen. Bis auf diese Betätigungsvorrichtung 70 stimmt die Servolenkung mit der in Fig. 1 dargestellten Servolenkung überein, so daß gleiche Bauteile mit gleichen Bezugszeichen versehen sind. Die Betätigungsvorrichtung 70 weist einen Steilgewindetrieb 71 auf, der eine auf der Lenksäule 10 angeordnete Spiralnut 72 und eine Führungsmutter 73 mit Kugeln 74 und Führungsstücke umfaßt. Die Führungsmutter 73 ist mittels Bolzen 76 in den mit der Eingangswelle 11 des Lenkgetriebes einstückigen Segmenten 32 des Verdrehglieds 15 axial verschieblich gehalten. Die Kugeln 74 werden durch die radial verschieblichen Führungstücke 75 von einer ringförmigen Feder 77 in die Lauffflächenflanken der Spiralnut 72 gedrückt. An der freien Stirnseite der Führungsmutter 73 ist eine Betätigungsplatte 78 befestigt, die mit im Lenkgehäuse 14 befestigten Betätigungszungen 79 ein Betätigungsglied 80 für die mechanischen Schaltkontakte 63 - 66 in Fig. 10 bildet. Diese Schaltkontakte 63 - 66 sind als Sprungkontakte ausgebildet, und die jeweils gemeinsam betätigten beiden Schaltkontakte 63,64 und 65,66 sind zu einem Mikroschalter 81 bzw. 82 (Fig. 6) zusammengefaßt. Die Schaltstifte 83,84 der Mikroschalter 81,82 sind auf beiden Seiten der Betätigungszungen 79 angeordnet, die an dem von den Mikroschaltern 81,82 abgekehrten Ende auf einem Lagerbolzen 85 schwenkbar gehalten sind und über Rollen 86 sich auf beiden Seiten der Betätigungsplatte 78 an dieser abstützen. Bei einer Verdrehung des Verdrehglieds 15 führt die Führungsmutter 73 einen Axialhub in die eine oder andere Richtung, je nach Richtung der Verdrehung des Verdrehglieds 15, aus. Dabei verschwenkt die Betätigungsplatte 78 über die Rollen 86 eine der Betätigungszungen 79. Entsprechend wird der Schaltstift 83 oder 84 des Mikroschalters 81 bzw. 82 verschoben, und die Springkontakte des Mikroschalters springen in ihre Schließstellung um. Je nach Verdrehrichtung des Verdrehglieds 15 sind entweder die Schaltkontakte 63 und 64 oder 65 und 66 geschlossen, und der Servomotor 16 läuft in die entsprechende Drehrichtung. Erst wenn die Verdrehung des Verdrehglieds 15 wieder zurückgenommen wird, geht die Führungsmutter 73 mit Betätigungsplatte 78 in ihre in Fig. 6 dargestellte Neutralstellung zurück. In dieser Neutralstellung sind die Schaltstifte 83,84 der Mikroschalter 81,82 soweit freigegeben, daß die von ihnen beaufschlagten Sprungkontakte wieder in ihre Offenstellung umspringen. Alle Schaltkontakte 63 - 66 in Fig. 10 sind geöffnet. Die Ansteuerung des Transistors 67 von der Steuerschaltung 50 mit einem von der Amplitude des der Steuerschaltung 50 vom Sensor 40 zugeführten Sensorsignals bestimmten Tastverhältnis $t/T$ erfolgt in gleicher Weise wie zu Fig. 10 beschrieben, so daß der Servomotor 16 ein an die Größe der Verdrehung des Verdrehglieds 15 und an deren Verdrehrichtung angepaßtes Drehmoment an die Eingangswelle 11 des Lenkgetriebes liefert.

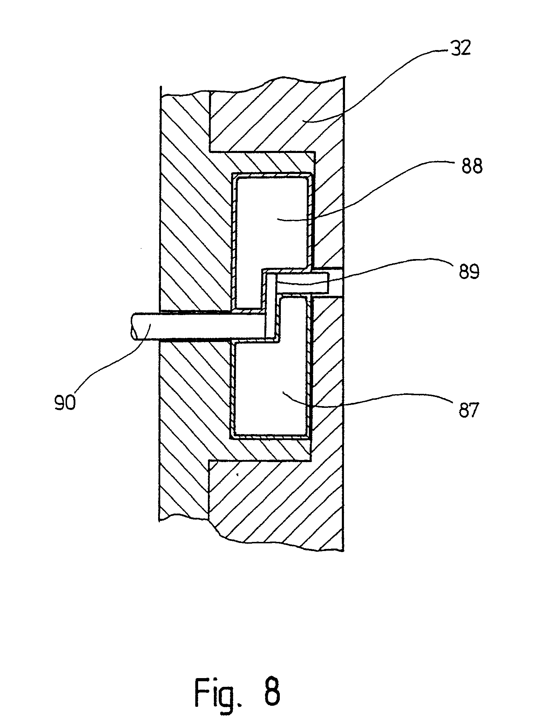

Bei dem Ausführungsbeispiel der Servolenkung gemäß Fig. 7 und 8 ist bei gegenüber Fig. 6 ansonsten unveränderter Servolenkung lediglich die Schaltkontaktbetätigungs vorrichtung 70' anders ausgeführt. Diese weist jeweils zwei in jedem der Segmente 32 des Verdrehglieds 15 eingebettete flüssigkeitsgefüllte Kissen 87,88 (Fig. 8) auf, die an einem in Achsrichtung verschiebbaren Kolben 89 mit Kolbenstange 90 so anliegen, daß sie diesen in Axialrichtung in beide Verschieberichtungen verschieben können. Die flüssigkeitsgefüllten Kissen 87,88 sind im Randbereich der Segmente 32 angeordnet, in welchem die Segmente 32 stärker gekrümmt sind und sich zwischen dem Biegering 30 und der Oberfläche der Segmente 32 der Luftspalt 91 bildet (Fig. 7). Jedem Kissen 87,88 ist eine großflächige Kolbenplatte 92 zugeordnet, die mittels eines Plattenstößels 93 an dem Biegering 30 anliegt. Die beiden Kolbenstangen 90 ragen aus den beiden Segmenten 32 axial vor und sind mit einer ringförmigen Betätigungsplatte 94 starr verbunden. Die Betätigungsplatte 94 trägt den beweglichen Teil eines Hallschrankengebers 95. Die Schaltkontakte in der Brückenschaltung 44 in Fig. 10 werden von den elektrisch betätigten Schaltkontakten von Schaltrelais gebildet. Die jeweils gleichzeitig zu schaltenden Schaltkontakte sind zu einem Doppelkontakt eines Schaltrelais zusammengefaßt, der jeweils von einer Relaiswicklung betätigt wird. Die beiden Ausgänge des Hallschrankengebers 95 sind mit jeweils der Relaiswicklung eines der beiden Schaltrelais verbunden. Wird das Verdrehglied 15 in die eine oder andere Richtung durch Drehen am Lenkrad verdreht, so werden die entsprechenden Biegeringabschnitte des Biegerings 30 im Bereich der Luftspalte 91 gestreckt. Der gestreckte Biegeringabschnitt wirkt über die Plattenstößel 93 und die Kolbenplatte 92 je nach Verdrehrichtung auf eines der beiden flüssigkeitsgefüllten Kissen 87 oder 88. Der Druck auf das jeweilige Kissen 87 oder 88 wird auf den Kolben 89 übertragen und diese schiebt die Kolbenstange 90 je nach Verdrehrichtung des Verdrehglieds 15 in die eine oder andere Axialrichtung. Damit wird die Betätigungsplatte 94 und damit der bewegliche Teil des Hallschrankengebers 95 verschoben. Je nach Verschieberichtung steuert der Hallschrankengeber das eine oder andere Schaltrelais an, so daß die Relais-Doppelkontakte 63,64 oder 65,66 (Fig. 10) geschlossen werden.

Anstelle des Hallschrankengebers 95 kann die Servolenkung gemäß Fig. 7 und 8 auch mit einem in Fig. 6 dargestellten Betätigungsglied 80 zur Betätigung der mechanischen Schaltkontakte 63 - 66 in Fig. 10 ausgerüstet werden. In diesem Fall wird die Betätigungsplatte 94 durch die Betätigungsplatte 84 in Fig. 6 ersetzt, die in gleicher Weise über die Betätigungszungen 79 die Mikroschalter 81,82 betätigt.

Selbstverständlich kann bei der Servolenkung gemäß Fig. 6 auch das Betätigungsglied 80 durch einen Hallschrankengeber 95 gemäß Fig. 7 ersetzt werden. In diesem Fall ist die Schaltkontaktbetätigungsvorrichtung 70 in Fig. 6 zur Betätigung von elektrischen Schaltkontakten geeignet, z.B. von Relaiskontakten, wie diese in Verbindung mit der Schaltkontaktbetätigungsvorrichtung 70′ in Fig. 7 vorgesehen sind.

Alle vorstehend beschriebenen Ausführungsformen der bevorzugt als Parkierhilfe eingesetzten Servolenkung haben gegenüber den nachstehend beschriebenen Ausführungsbeispielen einer ebenfalls als Parkierhilfe verwendeten Servolenkung mit Schlupfkupplung den Vorteil, eines deutlich günstigeren Wirkungsgrades, da keine Schlupfverluste auftreten. Ein Überlastschutz für den Servomotor läßt sich in einfacher Weise durch Eingriff in den Transistor 67 erzielen.

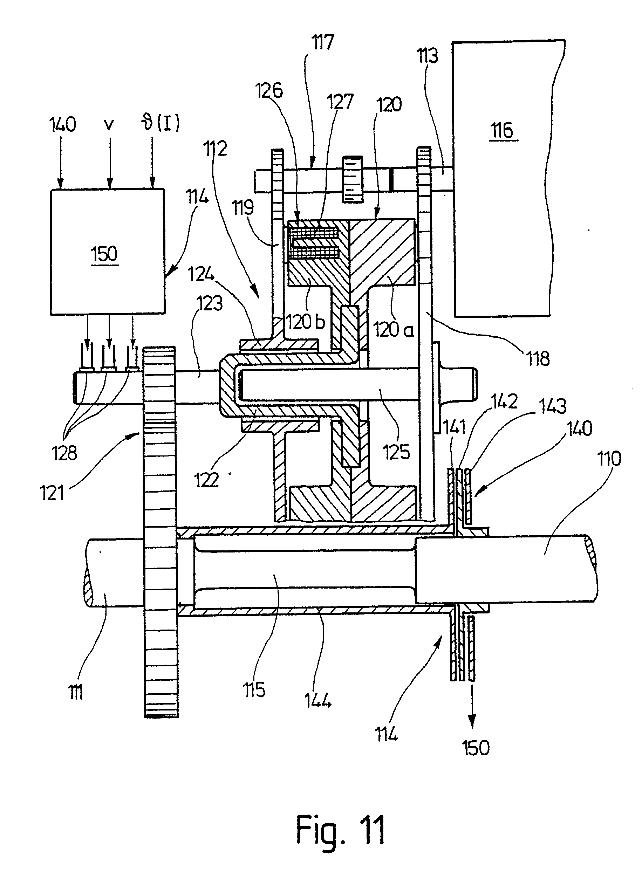

Die in Fig. 11 im Längsschnitt und nur ausschnittweise schematisch skizzierte Servolenkung weist eine Lenksäule 110 auf, an deren oberem Ende (Fig. 11 rechts) drehfest ein nicht dargestelltes Lenkrad sitzt. Axial fluchtend zur Lenksäule 110 ist eine Eingangswelle 111 eines nicht dargestellten Lenkgetriebes angeordnet, die ebenso wie die Lenksäule 110 drehbar gelagert ist. Lenksäule 110 und Eingangswelle 111 sind fluchtend angeordnet und über ein hier als Torsionsstab 115 ausgebildetes Verdrehglied miteinander verbunden, wodurch eine begrenzte Relativverdrehung zwischen Lenksäule 110 und Eingangswelle 111 ermöglicht wird. Ein als permanentmagneterregter Gleichstrommotor ausgebildeter elektrischer Servomotor 116, der mit etwa konstanter Geschwindigkeit in einer einzigen Drehrichtung umläuft, kann mittels einer bidirektionalen Schlupfkupplung 112 auf die Eingangswelle 111 des Lenkgetriebes gekoppelt werden, so daß der Servomotor 116 über seine Abtriebswelle 113 mit einem die Lenkbewegung am Lenkrad in die eine oder andere Richtung unterstützenden Drehmoment an der Eingangswelle 111 des Lenkgetriebes angreift. Eine Sensorvorrichtung 114, die hier aus einem Wirbelstromsensor 114 und aus einer Steuerschaltung 150 besteht, erfaßt eine Relativverdrehung der Lenksäule 110 gegenüber der Eingangswelle 111 sowohl nach Richtung als auch nach Größe der Verdrehung und steuert die Schlupfkupplung 112 derart, daß diese ein von der Relativverdrehung 110 zwischen Lenksäule und Eingangswelle 111 abhängiges Kupplungsmoment erzeugt.

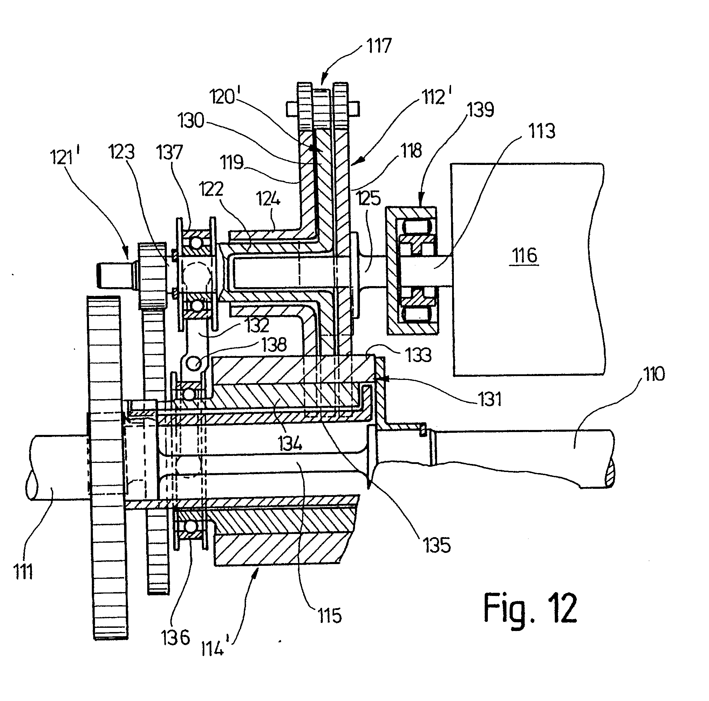

Im einzelnen weist die bidirektionale Schlupfkupplung 112 zwei drehbar gelagerte Kupplungsscheiben 118,119 und ein zwischen diesen koaxial angeordnetes Gegenkupplungsteil 120 auf. Die beiden Kupplungsscheiben 118,119 werden von dem Servomotor 116 über ein Umkehrgetriebe 117 in inversen Drehrichtungen angetrieben, wobei der Servomotor 113 direkt in das Umkehrgetriebe 117 eintreibt und die zueinander koaxialen Kupplungsscheiben 118,119 mit Zahnrädern des Umkehrgetriebes 117 in Eingriff stehen. Das Gegenkupplungsteil 120 ist über ein einstufiges Vorgelege 121 mit der Eingangswelle 111 des Lenkgetriebes gekoppelt. In einer Abwandlung der konstruktiven Gestaltung kann die Kupplungsscheibe 118 drehfest auf der Abtriebswelle 113 des Servomotors 116 sitzen, wie dies auch bei der Servolenkung in Fig. 12 der Fall ist. In diesem Fall wird das Vorgelege 121 zwei- oder mehrstufig ausgeführt.

Das Gegenkupplungsteil 120 ist zweiteilig ausgebildet, wobei jedes Kupplungsstück 120a,120b einer Kupplungsscheibe 118 bzw. 119 zugeordnet ist. Beide Kupplungsstücke 120a und 120b sind fest miteinander verbunden und sitzen auf einer gemeinsamen Hohlwelle 122, die mit der Eintriebswelle 123 des Vorgeleges 121 drehfest gekoppelt ist. Die Hohlwelle 122 geht durch eine Nabe 124 der Kupplungsscheibe 119 hindurch und dient als Lagerung für diese Kupplungsscheibe 119. In die Hohlwelle 122 ragt eine mit der Kupplungsscheibe 118 drehfest verbundene Welle 125 hinein, die in dieser drehbar gelagert ist. Jedes Kupplungsstück 120a,120b trägt einen ringförmigen Elektromagneten, von denen lediglich der Elektromagnet 126 mit Erregerwicklungen 127 im Kupplungsstück 120b zu sehen ist. Die Erregerwicklung 127 sind über drei auf der Eintriebswelle 123 des Vorgeleges 121 sitzende Schleifkontakte 128 mit der Steuerschaltung 150 elektrisch leitend verbunden, wobei diese wahlweise einen Erregerstrom an die Erregerwicklungen 127 des Kupplungsstückes 120a oder des Kupplungsstücks 120b legt. Sind die Erregerwicklungen 127 eines Kupplungsstücks 120a bzw. 120b bestromt, so wird das Gegenkupplungsteil 120 mit der zugeordneten Kupplungsscheibe 118 bzw. 119 zur Drehmitnahme gekoppelt. Je nach Größe der durch den Erregerstrom bestimmten elektromagnetischen Kraft tritt zwischen der Kupplungsscheibe 118 bzw. 119 und dem Gegenkupplungsteil 120 ein Schlupf auf, so daß ein von der Größe des Schlupfs abhängiges Drehmoment über das Vorgelege 121 auf die Eingangswelle 111 des Lenkgetriebes übertragen wird. Durch die aus Wirbelstromsensor 140 und Steuerschaltung 150 bestehende Sensorvorrichtung 114 wird dabei der Erregerstrom für die Elektromagneten 126 so festgelegt, daß der Schlupf umgekehrt proportional der Größe der Relativverdrehung der Lenksäule 110 gegenüber der Eingangswelle 111 ist.

Der Wirbelstromsensor 140 ist wie in Fig. 1 ausgebildet und besteht aus zwei gegeneinander verdrehbaren Schlitzscheiben 141,142, einer dazwischenliegenden, hier nicht dargestellten Gleitfolie und aus einer Trägerplatte 143, die mit gedruckten Spulen besetzt ist. Die Trägerplatte 143 ist verdrehfest gehalten, während die Schlitzscheibe 141 an der Lenksäule 110 und die Schlitzscheibe 142 über eine Hülse 144 an der Eingangswelle 111 befestigt ist. Die Spulen sind von Wechselstrom durchflossen. Bei Verdrehung des Torsionsstabs 115 und der damit verbundenen Relativverdrehung von Lenksäule 110 und Eingangswelle 111 ergibt sich eine unterschiedliche Überdeckung der Schlitzscheiben 141,142 entsprechend dem Grad der Verdrehung. Dies führt zu einer mehr oder weniger großen Dämpfung der angelegten hochfrequenten Spannung. Außerdem weist dieses Signal noch eine die Verdrehrichtung charakterisierende Kennung auf. Dieses Signal des Wirbelstromsensors 140 wird der Steuerschaltung 150 zugeführt, die je nach Richtung der Relativverdrehung die Erregerwicklungen 127 von Kupplungsstück 120a oder Kupplungsstück 120b erregt, und zwar mit einem Erregerstrom, dessen Größe von der Amplitude des Ausgangssignals des Wirbelstromsensors 140 bestimmt ist.

Wird die Servolenkung nur als Parkierhilfe verwendet, so wird der Steuerschaltung 150 noch ein die Fahrzeuggeschwindigkeit v kennzeichnendes elektrisches Signal zugeführt. Wird dieses Signal größer als eine Vorgabeschwelle, so wird der Erregerstrom abgeschaltet. Die Schlupfkupplung 112 ist offen und die Servolenkung ist passiviert. Ein sanftes Zu- bzw. Abschalten der Parkierhilfe ist dadurch realisierbar, daß die Ansteuerung der Schlupfkupplung 112 nicht abrupt sondern über einen bestimmten Geschwindigkeitsbereich gleitend erfolgt. Bei hohen Handmomenten wird hierdurch ein unerwünschter Ruck am Lenkrad vermieden. Außerdem kann mittels der Steuerschaltung 150 noch ein Überlastschutz für den Servomotor 116 geschaffen werden. In diesem Fall wird der Steuerschaltung 150 ein dem Motorstrom I oder der Motortemperatur ν proportionales elektrisches Signal zugeführt. Übersteigt dieses Signal einen Vorgabewert, so wird ebenfalls der Erregerstrom abgeschaltet, so daß die Schlupfkupplung 112 öffnet, und Servomotor 116 entlastet wird.

Bei der Servolenkung gemäß Fig. 12 ist das Gegenkupplungsteil 120′ als axial verschiebbare Friktionsscheibe 130 ausgebildet, die wiederum drehfest mit der Hohlwelle 122 und der Eintriebwelle 123 des hier zweistufig ausgebildeten Vorgeleges 121 verbunden ist. Die Sensorvorrichtung 114′ ist hier rein mechanisch ausgebildet und weist einen Kugelgewindetrieb 131, der eine Drehbewegung der Lenksäule 110 relativ zur Eingangswelle 11 des Lenkgetriebes in eine Axialverschiebung umsetzt, die über einen zweiarmigen Schwenkhebel 132 eine entsprechende Axialverschiebung der Friktionsscheibe 130 bewirkt, so daß die Friktionsscheibe 130 entweder an die Kupplungsscheibe 118 oder an die Kupplungsscheibe 119 angepreßt wird. Die drehende Kupplungsscheibe 118 bzw. 119 nimmt damit die Friktionsscheibe 130 mit, wobei der bestehende Schlupf wiederum abhängig ist von der Größe der Relativverdrehung zwischen Lenksäule 110 und Eingangswelle 111.

Im einzelnen weist der Kugelgewindetrieb 131 zwei Getriebeteile 133 und 134 auf, die jeweils ein Steilgewinde tragen, in welchen hier nicht dargestellte Kugeln einliegen. Der Getriebeteil 133 ist starr mit der Lenksäule 110 verbunden, während der Getriebeteil 134 drehbar und axial verschiebbar auf einer mit der Eingangswelle 111 verbundenen Hülse 135 sitzt. Auf dem Getriebeteil 134 sitzt drehbar aber axial unverschieblich eine Verschiebemuffe 136, und eine gleiche Verschiebemuffe 137 sitzt drehbar aber axial unverschiebbar auf der starr mit der Hohlwelle 122 verbundenen Eintriebwelle 123 des Vorgeleges 121′. In beide Verschiebemuffen 136,137 greift der Schwenkhebel 132 mit jeweils einem Hebelende ein. Die Schwenkachse 138 des Schwenkhebels 132 verläuft quer zur Verschieberichtung der Verschiebemuffen 136,137, so daß eine Axialbewegung der Verschiebemuffe 136 in eine entgegengerichtete Axialverschiebung der Verschiebmuffe 137 umgesetzt wird.

Wird am Lenkrad eine Lenkkraft aufgebracht, so wird das an der Lenksäule 110 angreifende Drehmoment über den Torsionsstab 115 auf die Eingangswelle 111 des Lenkgetriebes übertragen. Die dabei auftretende Relativverdrehung der Lenksäule 110 wird über den Kugelgewindetrieb 131 in eine Axialverschiebung des Getriebeteils 134 und damit der Verschiebmuffe 136 umgesetzt, die proportional der Relativverdrehung zwischen Lenksäule 110 und Eingangswelle 111 ist. Je nach Richtung der Relativverdrehung wird dabei die Verschiebmuffe 136 in Fig. 12 nach links oder rechts verschoben. Diese Bewegung der Verschiebemuffe 136 wird über den Schwenkhebel 132 in eine entsprechende Verschiebebewegung der Verschiebemuffe 137 nach rechts oder links umgesetzt, wodurch die Friktionsscheibe 130 an die Kupplungsscheibe 118 oder an die Kupplungsscheibe 119 angelegt wird. Da der Verschiebeweg der Friktionsscheibe 130 kleiner ist als der Verschiebeweg der vom Kugelgewindetrieb 131 angetriebenen Verschiebemuffe 136 wird eine mehr oder weniger große Anpreßkraft der Friktionsscheibe 130 an die entsprechende Kupplungsscheibe 118,119 erzeugt. Entsprechend wird die Friktionsscheibe 130 mit einem mehr oder weniger großen Schlupf von der jeweiligen Kupplungsscheibe 118 bzw. 119 mitgenommen und ein entsprechendes Drehmoment über das zweistufige Vorgelege 121 auf die Eingangswelle 113 des Lenkgetriebes übertragen.

Im Gegensatz zu der Servolenkung in Fig. 11 treibt hier der Servomotor 116 die Kupplungsscheibe 118 direkt an, und diese treibt über das Umkehrgetriebe 117 die Kupplungsscheibe 119. Entsprechend ist das Vorgelege 121' zweistufig ausgebildet. Auch hier ist es jedoch - ebenso wie bei der Servolenkung in Fig. 11 - möglich, daß das eine Zahnrad des Umkehrgetriebes 117 auf der Abtriebswelle 113 des Servomotors 116 sitzt, so daß letztere direkt in das Umkehrgetriebe eintreibt. In diesem Fall kann das Vorgelege 121' auch wieder einstufig ausgeführt werden.

Um Reißvorgänge am Lenkrad ohne Behinderung durch den Servomotor 16 zu ermöglichen und dabei die Behinderung durch die Reibung der zum Teil in Öl laufenden Kupplungsscheiben 118,119 und der beschleunigten Drehmassen möglichst gering zu halten, ist zwischen der Abtriebswelle 13 des Servomotors 116 und der drehfest mit der Kupplungsscheibe 118 verbundenen Welle 125 ein fliehkraftgesteuerter Freilauf 139 angeordnet. Dieser Freilauf 139 bildet zusätzlich einen Überlastschutz für den Servomotor 116 und stellt bei Passivierung der Servolenkung eine völlige Entkopplung des Servomotors 116 sicher. Die Abtriebswelle 113 des Servomotors 116 bildet die Antriebswelle des Freilaufs 139, während die Welle 125 die Abtriebswelle des Freilaufs 139 darstellt. Treibt der Servomotor 116 - wie in Fig. 11 -direkt in das Umkehrgetriebe 117 ein, so ist der Freilauf 139 zwischen der Abtriebswelle 113 des Servomotors 116 und der Eingangswelle des Umkehrgetriebes 117 anzuordnen, die das die Kupplungsscheibe 118 antreibende Zahnrad trägt.

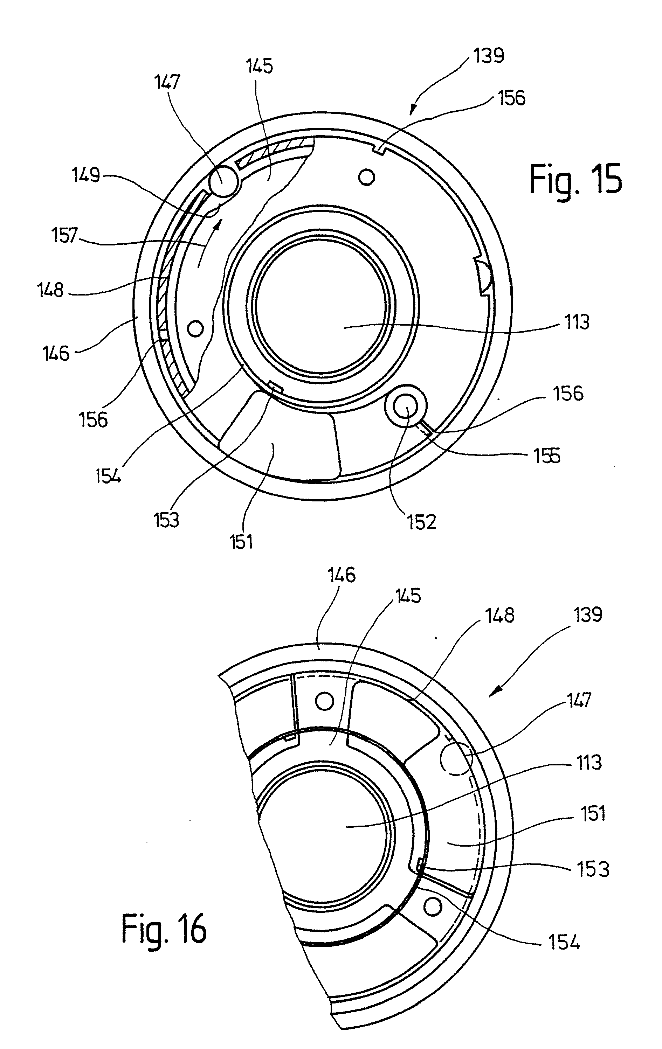

Zwei Ausführungsbeispiele des fliehkraftgesteuerten Freilaufs 139 sind in Fig. 15 und 16 dargestellt. Jeder Freilauf 139 umfaßt einen mit seiner Antriebswelle (hier Abtriebswelle 113 des Servomotors 116) drehfest umlaufenden Innenring 145, einen dazu koaxialen, mit seiner Abtriebswelle (hier Welle 125 der Kupplungsscheibe 118) drehfest verbundenen Außenring 146, zwischen Innen- und Außenring 145,146 sich abstützende Klemmkörper 147 und einen fliehkraftgesteuerten Steuerkäfig 148. Die hier als drei Rollen ausgebildeten Klemmkörper 147 sind gleichmäßig über den Umfang verteilt und liegen in Axialnuten 149 im Innenring 145 ein. Jede Axialnut 149 hat in Umfangsrichtung gesehen zwei Nutbereiche, in welche der Klemmkörper 147 sich hineinbewegen kann. Verschiebt sich der Klemmkörper 147 in den in Umlaufrichtung 157 des Innenrings 145 hinteren Nutbereich, so werden Innen- und Außenring 145,146 drehfest miteinander verbunden (Klemmstellung). Verschiebt sich der Klemmkörper 147 in den in Umlaufrichtung 129 vorderen Nutbereich, so sind Innen- und Außenring 145,146 zur voneinander unabhängigen Drehbewegung freigegeben (Freilaufstellung). Die Drehrichtung 157 des Innenrings 145 stimmt mit der Umlaufrichtung des Servomotors 116 überein. Da der vom Servomotor 116 angetriebene Innenring 145 immer etwas schneller dreht als der über die Welle 125 belastete Außenring 146 verschieben sich die Klemmkörper 147 in den hinteren Nutbereich und nehmen ihre Klemmstellung ein. Die Kupplungsscheiben 118,119 werden nunmehr über das Umkehrgetriebe 117 vom Servomotor 116 angetrieben. Bei Reißbewegungen am Lenkrad dreht der Außenring 146 kurzfristig schneller als der Innenring 145. Dadurch werden die Klemmkörper 147 aus ihrer Klemmstellung in ihre Freilaufstellung im vorderen Nutbereich überführt. Der Außenring 146 kann sich frei drehen und kann den Innenring 145 überholen.

Zur Steuerung des Steuerkäfigs 148 sind drei Fliehgewichte vorgesehen, von denen in Fig. 15 nur das Fliehgewicht 151 zu sehen ist, das im Punkt 152 am Innenring 145 schwenkbar gelagert ist. Die Fliehgewichte 151 sind über eine Lasche 153 mit einer Feder 154 verbunden, welche die Fliehgewichte 151 nach innen zieht. Die Fliehgewichte 151 greifen mit Mitnehmern 155 in Ausnehmungen 156 im Steuerkäfig 148 und verschieben dadurch bei ihrem Schwenken den Steuerkäfig 148 in Umfangsrichtung. Die Feder 154 und die Fliehgewichte 151 sind nun so ausgelegt, daß bei Unterschreiten einer unteren Grenzdrehzahl des Innenrings 145 die Fliehgewichte 151 von der Feder 154 nach innen gezogen werden und dabei den Steuerkäfig 148 in Drehrichtung 157 des Innenrings 145 verdrehen. Der Steuerkäfig 148 verschiebt dabei die Klemmkörper 147 aus ihrer Klemmstellung in die Freilaufstellung, so daß nunmehr der Innenring 145 gegenüber dem Außenring 146 frei drehen kann. Damit wird eine Überlastung des Servomotors 116 sicher verhindert.

Das Ausführungsbeispiel des Freilaufs 139 in Fig. 16 unterscheidet sich von dem beschriebenen Ausführungsbeispiel gemäß Fig. 15 lediglich dadurch, daß ein Teil des Steuerkäfigs 148 die biegeelastische Aufhängung der Fliehgewichte 151 und ein anderer Teil des Steuerkäfigs 148 die Wegbegrenzung der Fliehgewichte 151 bei hohen Drehzahlen bildet. Die Fliehgewichte 151 sind wiederum über Laschen 153 mit der Feder 154 verbunden.

Üblicherweise wird die in Fig. 12 dargestellte und beschriebene Servolenkung - ebenso wie die Servolenkung gemäß Fig. 11 - als Parkierhilfe eingesetzt. Oberhalb einer vorgegebenen Grenze der Fahrzeuggeschwindigkeit wird der Servomotor 116 abgeschaltet und die Lenkung erfolgt direkt, wobei das Drehmoment der Lenksäule 110 über den Torsionsstab 115 in die Eingangswelle 111 des Lenkgetriebes eingeleitet wird. Um dabei eine von der Drehmomentübertragung durch einen zu weichen Torsionsstab 115 herrührende "schwammige" Lenkung zu vermeiden, ist zwischen Lenksäule 110 und Eingangswelle 111 eine Zentriervorrichtung 160 vorgesehen, die bei Passivierung der Servolenkung oberhalb der vorgegebenen Fahrzeuggeschwindigkeit aktiviert wird und eine starre Kopplung zwischen Lenksäule 110 und Eingangswelle 111 herbeiführt.

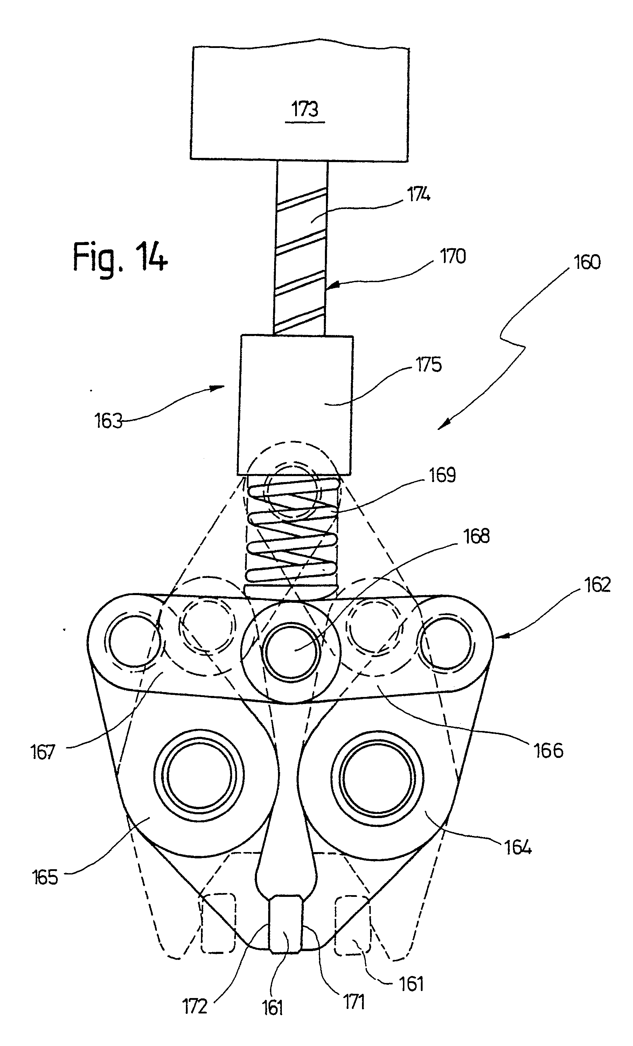

Ein Ausführungsbeispiel einer solchen Zentriervorrichtung ist in Fig. 14 dargestellt. Sie umfaßt einen auf der Lenksäule 110 radial vorstehenden Anschlagnocken 161, einen mit diesem zusammenwirkenden, auf der Eingangswelle 110 des Lenkgetriebes angeordneten Koppelgelenkmechanismus 162 und einen Antrieb 163 zum Betätigen des Koppelgelenkmechanismus 162. Der Koppelgelenkmechanismus 162 weist zwei zweiarmige Schwenkhebel 164,165 und zwei jeweils an einem Ende der Schwenkhebel 164,165 angelenkte Koppeln 166,167 auf, die mit ihrem schwenkhebelfernen Ende drehbar auf einem Gelenkzapfen 168 gehalten sind. An ihren freien Enden tragen die Schwenkhebel 164,165 auf den einander zugekehrten Seiten jeweils einen Anlagebacken 171 bzw. 172 zum Anlegen an den Anschlagnocken 161. Der Koppelgelenkmechanismus 162 ist nun derart ausgebildet, daß er durch Verschieben des Gelenkzapfens 168 zwei Endpositionen einnimmt (in Fig. 14 ausgezogen und strichliniert dargestellt), in welcher einmal die Anlagebacken 171,172 kraftschlüssig an dem Anschlagnocken 161 anliegen bzw. mit Abstand beidseitig vom Anschlagnocken 161 liegen. In der in Fig. 14 ausgezogen dargestellten Verriegelungsstellung, in welcher durch kraftschlüssige Anlage der Anlagebacken 171,172 am Anschlagnocken 161 die starre Kopplung von Lenksäule 110 und Eingangswelle 111 bewirkt wird, liegen die beiden Kopplen 166,167 mit dem Gelenkzapfen 168 in einer Totpunktlage, in welcher eine über den Anschlagnocken 161 auf die Anlagebacken 171,172 ausgeübte Druckkraft am Gelenkzapfen 168 eine Verschiebekraft erzeugt, die den Gelenkzapfen 168 weiter in die Verriegelungsstellung hinzutreiben sucht. Dadurch wird der Koppelgelenkmechanismus 162 in seiner Verriegelungsstellung kraftlos gehalten, so daß jede Drehbewegung der Lenksäule 110 spiellos auf die Eingangswelle 111 des Lenkgetriebes übertragen wird. Erst mit Herausbewegen des Gelenkzapfens 168 aus dieser Totpunktlage, was durch den Antrieb 163 bewirkt wird, kann die starre Kopplung von Lenksäule 110 und Eingangswelle 111 wieder aufgehoben werden.

Der Antrieb 163 umfaßt eine Schraubenfeder 169 zum Überführen des Gelenkzapfens 168 in die Totpunktlage und einen elektromotorischen Spindelbetrieb 170 zum Einstellen der Vorspannung der Schraubenfeder 169 und zum Überführen des Gelenkzapfens 168 in die Endposition mit Freigabe des Anschlagnockens 161. Der Spindeltrieb 170 besteht dabei aus einer von einem Elektromotor 173 angetriebenen Spindel 174 und einer auf der Spindel 174 verschraubbaren Spindelmutter 175, an welcher die Schraubenfeder 169 befestigt ist. Wird bei passivierter Servolenkung, d.h. bei abgeschaltetem Servomotor 116 die Fahrzeuggeschwindigkeitgrenze unterschritten, so wird zunächst mittels einer nicht dargestellten Steuereinheit der ungeregelt betriebene Servomotor 116 eingeschaltet. Dieser läuft auf seine Nenndrehzahl hoch. Dann wird der Elektromotor 173 eingeschaltet, der über die Schraubenfeder 169 den Genlenkzapfen zeit- oder geschwindigkeitsabhängig aus der Totpunktlage herauszieht. Dabei schwenken die Schwenkhebel 168,165 nach außen und der Anschlagnocken 161 wird zur Relativbewegung bezüglich der Anlagebacken 171,172 freigegeben. Wird die Fahrzeuggeschwindigkeit zur Passivierung der Servolenkung wieder erreicht, so wird der Elektromotor 173 in umgekehrter Drehrichtung eingeschaltet, wobei er die Vorspannung der Schraubenfeder 169 zeit- oder geschwindigkeitsabhängig erhöht, bis die Schraubenfeder 169 den Gelenkzapfen 168 in die Totpunktlage hineindrückt. Damit schwenken die Schwenkhebel 164,165 nach innen und die Anlagebacken 171,172 legen sich kraftschlüssig beidseitig an dem Anschlagnocken 161 an. Danach wird der Servomotor 116 abgeschaltet. Auf diese Weise wird ein sanftes Zu- und Abschalten der Zentriervorrichtung 160 bei Unter- bzw. überschreiten der Fahrzeuggeschwindigkeitsgrenze erreicht. Damit ist sichergestellt, daß einerseits bei Unterschreiten der Fahrzeuggeschwindigkeitsgrenze stets der erforderliche Mindestschlupf für einen ruckfreien, d.h. reibwertsprungfreien, Betrieb der Schlupfkupplung 112' gegeben ist, und andererseits bei Überschreiten der Fahrzeuggeschwindigkeitsgrenze erst eine Verhärtung der Verbindung zwischen Lenksäule 110 und Eingangswelle 111 des Lenkgetriebes hergestellt wird, bevor der Servomotor 116 abgeschaltet wird.

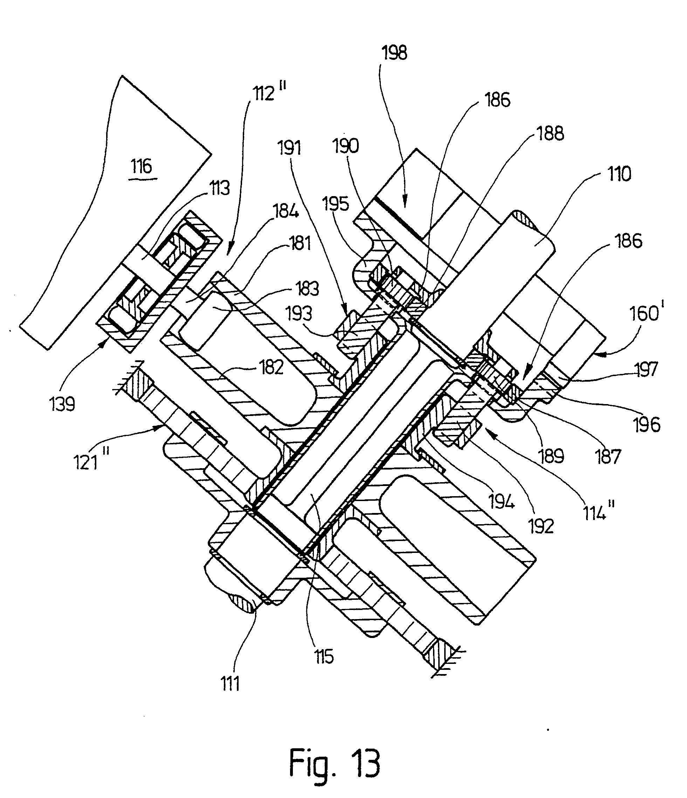

In Fig. 13 ist ein weiteres Ausführungsbeispiel einer Servolenkung dargestellt, die unterhalb einer vorbestimmten Fahrzeuggeschwindigkeitsgrenze aktiviert und damit im Bereich kleinerer Fahrzeuggeschwindigkeiten als Parkierhilfe eingesetzt wird. Die Lenkunterstützung wird wiederum durch den unidirektional und ungeregelt umlaufenden Servomotor 116 bewirkt, der über die Schlupfkupplung 112″ je nach Drehrichtung der Lenksäule 110 ein Drehmoment an der Eingangswelle 111 des Lenkgetriebes erzeugt. Die Schlupfkupplung 112″ weist zwei Reibscheiben 181,182, die im Axialabstand voneinander angeordnet und einstückig miteinander verbunden sind, und ein vom Servomotor 116 angetriebenes Reibrad 183 auf. Im Kraftverlauf zwischen Servomotor 116 und Reibrad 183 ist ein fliehkraftgesteuerter Freilauf 139 angeordnet, dessen Antriebswelle von der Abtriebswelle 113 des Servomotors 116 und dessen Abtriebswelle von der Reibradwelle 184 gebildet ist, auf der das Reibrad 183 drehfest sitzt. Die Reibradwelle 184 ist quer zur Drehachse der beiden Reibscheiben 181,182 ausgerichtet, und das Reibrad 183 ragt zwischen den beiden Reibscheiben 181,182 hinein. Bei Axialverschiebung der beiden Reibscheiben 181,182 wird jeweils eine an das Reibrad 183 angelegt und von dem Reibrad 183 angetrieben, so daß die beiden Reibscheiben 181,182 in die eine oder andere Drehrichtung umlaufen, je nachdem an welcher Reibscheibe 181 bzw. 182 das Reibrad 183 angreift. Die Reibscheiben 181,182 sind drehbar und axial verschiebbar auf einer Hülse 185 angeordnet, die den Lenksäule 110 und Eingangswelle 111 verbindenden Torsionsstab 115 kaoxial umschließt. Die beiden Reibscheiben 181,182 sind über ein Vorgelege 121″ mit der Eingangswelle 111 verbunden. Das Vorgelege 121″ ist hier als Planetengetriebe ausgebildet.

Die Sensorvorrichtung 114″ ist - ebenso wie die Sensorvorrichtung 114′ in Fig. 12 - rein mechanisch ausgebildet und wird von einer Umlenkeinheit gebildet, die die Drehbewegung der Lenksäule 110 relativ zur Eingangswelle 111 in eine Axialverschiebung der beiden Reibscheiben 181,182 umsetzt. Dabei wird eine der beiden Scheiben 181,182 mit einer von der Größe der Relativverdrehung abhängigen Anpreßkraft an das Reibrad 183 angepreßt. Die Umlenkeinheit besteht aus einem Planetengetriebe 186 mit Hohlrad 187, Sonnenrad 188 und zwei durch einen Steg 180 verbundenen Planetenrädern 189,190 und aus einem Spindelantrieb 191 mit zwei parallel zur Lenksäule 111 ausgerichteten Gewindespindel 192,193 und mit einer drehbar aber axial unverschiebbar mit den Reibscheiben 181,182 verbundenen Spindelmutter 194, in welcher die Gewindespindel 192,193 verschraubbar sind. Das Sonnenrad 188 ist mit der Lenksäule 110, das Hohlrad 187 mit der Hülse 185 und damit mit der Eingangswelle 111 und die beiden Planetenräder 189,190 sind mit den Gewindspindeln 192,193 jeweils drehfest verbunden.

Wird die Lenksäule 110 in die eine oder andere Drehrichtung verdreht, so werden die Planetenräder 189,190 angetrieben und treiben ihrerseits die Gewindespindeln 191,193. Je nach Drehrichtung werden dadurch die beiden Reibscheiben 181,182 auf der Hülse 185 nach links oder rechts verschoben. Dadurch wird entweder die Reibscheibe 181 oder die Reibscheibe 182 an das Reibrad 183 angelegt, und zwar mit einer Anpreßkraft, die proportional der Größe der Verdrehung der Lenksäule 110 relativ zu der Eingangswelle 111 ist. Das Reibrad 183 treibt mit einem von der Größe der Anpreßkraft abhängigen Schlupf die beiden Reibscheiben 181 und 182 in die gleiche Richtung an, in der auch das Drehmoment an der Lenksäule 110 wirkt. Das damit auf die Reibscheiben 181,182 übertragene Drehmoment wird über das Vorgelege 121″ in die Eingangswelle 111 des Lenkgetriebes eingeleitet.

Um bei der Passivierung der Servolenkung oberhalb der Fahrzeuggeschwindigkeitsgrenze eine "schwammige Lenkung zu vermeiden, ist auch hier eine Zentriervorrichtung 160′ vorgesehen, die bei passivierter Servolenkung eine starre Kopplung zwischen Lenksäule 110 und I111 unter Überbrückung des Torsionsstabs 115 herstellt. Die Zentriervorrichtung 160′ weist einen das Planetengetriebe 186 umschließenden Topf 195 auf, der einstückig mit der Hülse 185 ist. Der Topfrand trägt eine Axialverzahnung 196, in die eine auf der Lenksäule 110 axial verschieblich gehaltene und mit dieser drehfest verbundene Sperrklinke 197 einrastet. Die Sperrklinke 197 ist im Bereich unterhalb der Fahrzeuggeschwindigskeitsgrenze elektrisch entlüftbar, so daß der Topf 195 mit daran einstückig ansetztender Hülse 185 und mit der Hülse 185 drehfest verbundener Eingangswelle 111 sich relativ zur Lenksäule 110 drehen können. Ergänzend zur Sperrklinke 197 kann auch eine elektrisch betätigte Bremse 198 vorgesehen werden, wie sie in Fig. 13 an der linken Hälfte des Topfes 195 angedeutet ist, um bei Unterschreiten der Fahrzeuggeschwindigkeitsgrenze ein sanftes Einsetzen oder Unterstützen, z.B. über eine Rampensteuerung der Bremse, zu erreichen.

Bei der Ausführungsform der Servolenkung gemäß Fig. 11 können mit einer entsprechenden konstruktiven Änderung die Erregerspulen der Elektromagnete auch feststehend angeordnet werden. Hierdurch entfällt die Notwendigkeit des Vorsehens von Schleifringen für die Stromzuführung.

## Ansprüche

1. Servolenkung für Fahrzeuge mit einer ein Lenkrad tragenden Lenksäule, mit einem mit der Lenksäule in Verbindung stehenden Lenkgetriebe und mit einem elektrischen Servomotor, der eine

Drehbewegung am Lenkrad unterstützendes Drehmoment am Lenkgetriebe erzeugt, dadurch gekennzeichnet, daß der Servomotor (16) reversibel ausgebildet ist, daß Lenksäule (10) und Eingangswelle (11) des Lenkgetriebes in einer nur eine begrenzte Relativverdrehung zueinander zulassenden Weise miteinander gekoppelt sind, daß ein die Relativverdrehung erfassender Sensor (40) ein der Relativverdrehung proportionales Sensorsignal liefert, daß eine Steuerschaltung (50) vorgesehen ist, die das vom Servomotor (16) abgegebene Drehmoment in Abhängigkeit vom Sensorsignal steuert, und daß im Kraftfluß zwischen der Abtriebswelle des Servomotors (16) und der Eingangswelle (11) des Lenkgetriebes ein von der Lenksäule (10) gesteuerter bidirektionaler Freilauf (20) angeordnet ist, der so ausgebildet ist, daß er bei Relativverdrehung der Lenksäule (10) gegenüber der Eingangswelle (11) eine Drehverbindung zwischen Abtriebswelle des Servomotors (16) und Eingangswelle (11) herstellt.

2. Servolenkung nach Anspruch 1, dadurch gekennzeichnet, daß der Freilauf (20) ein mit der Abtriebswelle des Servomotors (16) gekoppeltes treibendes Teil (18,19), ein mit der Eingangswelle (11) des Lenkgetriebes gekoppeltes angetriebenes Teil (22) und ein mit der Lenksäule (10) gekoppeltes Steuerteil (23) aufweist und daß der Freilauf (20) derart ausgebildet ist, daß das Steuerteil (23) bei Drehbewegung der Lenksäule (10) solange eine drehfeste Verbindung zwischen dem treibenden und angetriebenen Teil (18,19;22) herstellt, wie das treibende Teil (18,19) nicht schneller dreht als das der Drehbewegung der Lenksäule (10) folgende Steuerteil (23).

3. Servolenkung nach Anspruch 2, dadurch gekennzeichnet, daß das treibende Teil von einem Außenring (19) mit Außenzahnkranz (18) gebildet ist, der mit einem von der Abtriebswelle des Servomotors (16) angetriebenen Untersetzungsgetriebe (17) kämmt, daß das angetriebene Teil von einem dazu koaxialen Innering (22) gebildet ist, der drehfest mit der Eingangswelle (11) des Lenkgetriebes verbunden ist und am Umfang im Abstand voneinander angeordnete Ausnehmungen (27) trägt, die jeweils einen Mittelabschnitt (27a) und daran beidseitig anschließende, nach außen sich verjüngende Seitenabschnitte (27b) aufweisen, und daß das Steuerteil jeweils in den Mittelabschnitten (27a) einliegende, sich am Innen- und Außenring (22,19) abstützende Wälzkörper (26) und einen zu Innen- und Außenring (22,19) koaxialen Steuerkäfig (23) zur Führung der Wälzkörper (26) aufweist, der mit jeweils zwei Steuerschultern (24,25) in Umfangsrichtung vor und hinter die Wälzkörper (26) greift.

4. Servolenkung nach Anspruch 3, dadurch gekennzeichnet, daß der Außenring (19) mit Außenzahnkranz (18) in Radialrichtung zweiteilig ausgebildet ist und daß die beiden koaxialen Ringteile (19a,19b) über eine elastische Zwischenschicht (28), miteinander verbunden sind.

5. Servolenkung nach Anspruch 4, dadurch gekennzeichnet, daß die an der elastischen Zwischenschicht (28) anliegenden Flächen der beiden Ringteile (19a,19b) grobgezahnt ausgebildet sind.

6. Servolenkung nach Anspruch 4 oder 5, dadurch gekennzeichnet, daß im Bereich der Zwischenschicht (28,69) Federelemente, z.B. Spiral-Spannstifte (68) oder Blattfedern,eingesetzt sind, die an beiden koaxialen Ringteilen (19a,19b) angreifen.

7. Servolenkung nach einem der Ansprüche 4 - 6, dadurch gekennzeichnet, daß die elastische Zwischenschicht (28) ringförmig ausgebildet ist.

8. Servolenkung nach einem der Ansprüche 4 - 6, dadurch gekennzeichnet, daß die elastische Zwischenschicht (69) einen mäanderförmigen Verlauf mit in abwechselnd in Radial- und Umfangsrichtung sich erstreckenden Abschnitten (69a,69b) aufweist.

9. Servolenkung nach Anspruch 6 und 8, dadurch gekennzeichnet, daß die Federelemente (68) in den Radialabschnitten (69a) der Zwischenschicht (69) angeordnet sind.

10. Servolenkung nach einem der Ansprüche 1 - 9, dadurch gekennzeichnet, daß zur Kopplung von Lenksäule (10) und Eingangswelle (11) des Lenkgetriebes ein Verdrehglied (15;115) einerseits mit der Lenksäule (10) und andererseits mit der Eingangswelle (11) in jeweils drehfester Verbindung steht.

11. Servolenkung nach Anspruch 10, dadurch gekennzeichnet, daß Lenksäule (10) und Eingangswelle (11) des Lenkgetriebes zueinander fluchtend angeordnet sind, daß das Verdrehglied (15) einen zur Lenksäule (10) und Eingangswelle (11) koaxialen Biegering (30) aufweist, der an in Umfangsrichtung mit Spaltabstand nebeneinander angeordneten Segmenten (31,32) befestigt ist, und daß die jeweils nicht benachbarten Segmente (31 bzw. 32) drehfest an der Lenksäule (10) bzw. an der Eingangswelle (11) gehalten sind.

12. Servolenkung nach Anspruch 11, dadurch gekennzeichnet, daß der Biegering (30) auf dem Außenumfang der Segmente (31,32) zumindest in deren Mittenbereich aufliegt und dort durch auf die Segmente (31,32) aufgeschraubte Druckplatten (33,34) festgespannt ist.

13. Servolenkung nach Anspruch 12, dadurch gekennzeichnet, daß die in Umfangsrichtung sich erstreckenden Abmessungen der Druckplatten (33,34) wesentlich kleiner sind als die der Segmente (31,32) und daß sich zwischen den Druckplatten (33,34) sich in Umfangsrichtung erstreckende Dämpfungselemente (36), z.B. aus Gummi, abstützen.

14. Servolenkung nach Anspruch 10, dadurch gekennzeichnet, daß Lenksäule (10) und Eingangswelle (11) des Lenkgetriebes zueinander fluchtend angeordnet sind und daß das Verdrehglied (115) von mindestens zwei in Umfangsrichtung paarweise gegeneinander wirkenden Druckfedern (56,57) gebildet ist, die sich an der Achse von Lenksäule (10) und Eingangwelle (11) diametral mit parallelen Federachsen gegenüberliegen und sich einerseits an einem mit der Lenksäule (10) drehfest verbundenen Tragteil (60) und andererseits an einem mit der Eingangswelle (11) fest verbundenen Tragteil (61) abstützen.

15. Servolenkung nach Anspruch 14, dadurch gekennzeichnet, daß die beiden scheibenförmigen Tragteile (60,61) zumindest im Bereich der schraubenförmig ausgebildeten Druckfedern (56,57) halbschalenförmig ausgewölbt sind und zusammen die Schraubendruckfedern (56,57) über deren Längserstreckung einschließen.

16. Servolenkung nach Anspruch 14 oder 15, dadurch gekennzeichnet, daß die Druckfedern (56,57) stirnseitig auf an den Tragteilen (60,61) angespritzten Zapfen (58,59) aufgesteckt sind, wobei die eine Druckfeder (56,57) aufnehmenden Zapfen (58,59) verschiedenen Tragteilen (60,61) zugehörig sind.

17. Servolenkung nach einem der Ansprüche 14 - 16, dadurch gekennzeichnet, daß zwischen dem äußeren Rand (60a) des topfförmig ausgebildeten, mit der Lenksäule (10) drehfesten Tragteils (60) und dem dazu koaxialen Innenring (22) des Freilaufs (20) ein Dämpfungsring (62), z.B. aus Gummi, eingebettet ist.

18. Servolenkung nach einem der Ansprüche 1 - 17, dadurch gekennzeichnet, daß der Servomotor (16) ein im Brückenzweig (44a) einer Brückenschaltung (44) angeordneter permanentmagneterregter Gleichstrommotor ist, daß die Brückenschaltung (44) vier steuerbare Schalter (51-54;63-66) aufweist, daß sie jeweils in der Brückenschaltung (44) einander diagonal gegenüberliegenden Schalter (51,52 bzw. 53,54;63,64 bzw. 65,66) zum Schließen und Öffnen gleichzeitig angesteuert werden, und daß ein Ansteuersignal für die Schalter (51-54;63-66) aus der Verdrehrichtung der Lenksäule (10) abgeleitet wird.

19. Servolenkung nach Anspruch 18, dadurch gekennzeichnet, daß die Schalter als steuerbare Halbleiterschalter (51-54) ausgebildet sind, daß im Sensorsignal eine Kennung für die Richtung der Relativverdrehung enthalten ist und daß aus der Kennung ein Schließsignal für die Halbleiterschalter (51-54) abgeleitet ist.

20. Servolenkung nach Anspruch 19, dadurch gekennzeichnet, daß jeweils eine der beiden gleichzeitig angesteuerten Halbleiterschalter (51-54) von der Steuerschaltung (50) mit einem Tastverhältnis (t/T) angesteuert wird, das von dem Amplitudenbetrag des Sensorsignals bestimmt ist.

21. Servolenkung nach Anspruch 18, dadurch gekennzeichenet, daß die Schalter als mechanisch oder elektrisch betätigte Schaltkontakte (63-66) ausgebildet sind und daß eine Schaltkontaktbetätigungsvorrichtung (70;170) vorgesehen ist, die abhängig von der Richtung der Relativverdrehung zwischen Lenksäule (10) und Eingangswelle (11) des Lenkgetriebes jeweils zugleich zwei der Schaltkontakte (63,64 bzw. 65,66) schließt und in der Nullstellung der Relativverdrehung alle Schaltkontakte (63-66) öffnet.

22. Servolenkung nach Anspruch 21, dadurch gekennzeichnet, daß die Schaltkontaktbetätigungsvorrichtung (70) einen Steilgewindetrieb (71) aufweist, der eine auf der Lenksäule (10) angeordnete Spiralnut (72) und eine mit der Eingangswelle (11) des Lenkgetriebes drehfest aber axial verschiebbar gekoppelte Führungsmutter (73) umfaßt, bei der mittels einer Ringfeder (77) Führungsstücke (75) mit Kugeln (74) in die Spiralnut (72) gedrückt werden und die dadurch bei Relativverdrehung von Lenksäule (10) und Eingangswelle (11) einen axialen Verschiebehub ausführt, und daß die Führungsmutter (73) ein Betätigungsglied (80) zur Betätigung der Schaltkontakte (63-66) trägt.

23. Servolenkung nach Anspruch 11 und 21, dadurch gekennzeichnet, daß die Segmente (31,32) des Verdrehglieds (15) am Außenumfang zu den Segmenträndern hin stärker gekrümmt sind, so daß im Randbereich der Segmente (31,32) zwischen dem Außenumfang der Segmente (31,32) und dem Biegering (30) ein zum Segmentrand hin sich vergrößernder radialer Luftspalt (91) verbleibt, daß die Schaltkontaktbetätigungsvorrichtung (170) in mindestens einem der mit der Eingangswelle (11) des Lenkgetriebes drehfest verbundenen Segmente (32) zwei in deren Randbereich eingebettete flüssigkeitsgefüllte Kissen (87,88), die an einem in Achsrichtung verschiebbaren Kolben (89) mit Kolbenstange (90) auf beiden Kolbenseiten anliegen, auf den Kissen (87,88) aufliegende großflächige Kolbenplatten (92), die mit einem Plattenstößel (93) an dem Biegering (30) anliegen, und ein mit der Kolbenstange (90) des Kolbens (89) verbindendes Betätigungsglied (94) zur Betätigung der Schaltkontakte (63-66) umfaßt.

24. Servolenkung nach einem der Ansprüche 21 - 23, dadurch gekennzeichnet, daß die Schaltkontakte (63-66) als Springkontakte ausgebildet und die jeweils gemeinsam betätigten beiden Springkontakte (63,64 bzw. 65,66) zu Seinem Mikroschalter (81 bzw. 82) zusammengefaßt sind und daß die Mikroschalter (81,82) auf beiden Seiten des Betätigungsglieds (80) so angeordnet sind, daß ihre Schaltstifte (83,84) in den Verschiebeweg des Betätigungsglieds (80) hineinragen und bei entgegengesetzten Verschiebebewegungen des Betätigungsglieds (80) von diesem beaufschlagt werden.

25. Servolenkung nach einem der Ansprüche 21 - 23, dadurch gekennzeichnet, daß die Schaltkontakte (63-66) von Relaiskontakten gebildet sind und die gemeinsam betätigten beiden Relaiskontakte zu einem von einer Relaiswicklung betätigten Doppelkontakt zusammengefaßt sind und daß ein mit zwei Ausgängen versehener Hallschrankengeber (95) vorgesehen ist, dessen beweglicher Teil auf dem Betätigungsglied (94) angeordnet ist.

26. Servolenkung nach einem der Ansprüche 21 - 25, dadurch gekennzeichnet, daß in Reihe mit der Brückenschaltung (44) ein steuerbarer Halbleiterschalter (67) angeordnet ist, der von der Steuerschaltung (50) mit einem Tastverhältnis (t/T) angesteuert wird, das von dem Amplitudenbetrag des Sensorsignals bestimmt ist.

27. Servolenkung nach einem der Ansprüche 1 - 26, dadurch gekennzeichnet, daß der Sensor (40) als Wirbelstromsensor ausgebildet ist und zwei gegeneinander verdrehbare Schlitzscheiben (41,42) mit dazwischenliegender Gleitfolie und eine Spulen tragende Trägerplatte (43) aufweist, und daß die Trägerplatte (43) feststehend angeordnet und eine Schlitzscheibe (41) mit der Lenksäule (10) und die andere Schlitzscheibe (42) mit der Eingangswelle (11) des Lenkgetriebes drehfest verbunden ist.

28. Servolenkung nach einem der Ansprüche 1 - 27, dadurch gekennzeichnet, daß in Reihe mit der Brückenschaltung (44) der Schaltkontakt (45a) eines Hauptrelais (45) angeordnet ist und daß eine Fahrzeuggeschwindigkeitserkennung (48) vorgesehen ist, die unterhalb eines Vorgabewerts der Fahrzeuggeschwindigkeit ein Schließsignal für das Hauptrelais (45) generiert.

29. Servolenkung nach Anspruch 28, dadurch gekennzeichnet, daß eine Gangerkennung (49) vorgesehen ist, die bei Erkennung eines im Fahrgetriebe eingelegten ersten vorwärtsgangs oder Rückwärtsgangs oder einer Leerlaufstellung des Schalthebels ein Schließsignal für das Hauptrelais (45) generiert und daß die Schließsignale von Fahrzeuggeschwindigkeitserkennung (48) und Gangerkennung (49) logisch "und"-verknüpft sind.

30. Servolenkung nach Anspruch 28 oder 29, dadurch gekennzeichnet, daß eine Tastverhältniserkennung (55) vorgesehen ist, die ein Schließsignal unterhalb eines vorgegebenen Wertes des Tastverhältnisses (t/T) generiert, und daß das Schließsignal mit dem Schließsignal der Fahrzeugerkennung (48) logisch "und"-verknüpft ist.

31. Servolenkung nach einem der Ansprüche 28 - 30, dadurch gekennzeichnet, daß die Steuerschaltung (50) eingangsseitig mit der Fahrzeuggeschwindigkeitserkennung (48) verbunden ist und bei Unter- bzw. Überschreiten der vorgabewerte der Fahrzeuggeschwindigkeit für das Aktivieren bzw. Passivieren den Halbleiterschalter (67) verzögert und unverzögert ansteuert zur Erzeugung eines beliebig vorgegebenen ansteigenden bzw. abfallenden verlaufes des Motormomentes über der Zeit oder Fahrgeschwindigkeit.

32. Servolenkung nach dem Oberbegriff des Anspruchs 1, dadurch gekennzeichnet, daß Lenksäule (110) und Eingangswelle (111) des Lenkgetriebes in einer nur eine begrenzte Relativverdrehung zueinander zulassenden Weise miteinander gekoppelt sind, daß eine Vorrichtung $(114;114';114'')$ zum Sensieren der Relativverdrehung von Lenksäule (110) und Eingangswelle (111) vorgesehen ist, daß der Servomotor (116) mindestens unterhalb einer vorgegebenen Fahrzeuggeschwindigkeit unidirektional umläuft, daß zwischen der Abtriebswelle (113) des Servomotors (116) und der Eingangswelle (111) des Lenkgetriebes eine bidirektional wirkende Schlupfkupplung $(112;112';112'')$ angeordnet ist und daß die Sensorvorrichtung $(114;114';114'')$ die Schlupfkupplung $(112;112';112'')$ derart steuert, daß diese ein von der Relativverdrehung zwischen Lenksäule (110) und Eingangswelle (111) abhängiges Kupplungsmoment erzeugt.

33. Servolenkung nach Anspruch 32, dadurch gekennzeichnet, daß die Schlupfkupplung $(112;112';112'')$ zwei in inversen Drehrichtungen vom Servomotor (116) angetriebene Kupplungsscheiben (118;119) und ein zwischen diesen drehbar angeordnetes Gegenkupplungsteil $(120;120')$ aufweist, das mit der Eingangswelle (111) des Lenkgetriebes über ein Getriebe $(121;121')$ verbunden ist, und daß die Sensorvorrichtung $(114;114')$ je nach Richtung der Relativverdrehung zwischen Lenksäule (110) und Eingangswelle (111) eine Kopplung zwischen dem Gegenkupplungsteil $(120;120')$ und einer der beiden Kupplungsscheiben (118,119) zu dessen Drehmitnahme mit einem vom Betrag der Relativverdrehung abhängigen Schlupf herstellt.

34. Servolenkung nach Anspruch 33, dadurch gekennzeichnet, daß das Gegenkupplungsteil (120) mittels mindestens zweier Elektromagnete (126) mit Erregerwicklungen (127) wahlweise mit der einen oder anderen Kupplungsscheibe (118,119) kuppelbar ist und daß die Sensorvorrichtung (114) einen elektrischen Sensor, z.B. Wirbelstromsensor (140), der ein der Relativverdrehung zwischen Lenksäule (110) und Eingangswelle (111) des Lenkgetriebes proportionales und die Richtung der Relativverdrehung kennzeichnendes elektrisches Ausgangssignal liefert, und eine Steuerschaltung (150) aufweist, die in Abhängigkeit vom Ausgangssignal des Sensors (140) die Erregerwicklungen (127) des einen oder anderen Elektromagneten (126) mit einem Erregerstrom belegt.

35. Servolenkung nach Anspruch 34, dadurch gekennzeichnet, daß die Erregerwicklungen (127) der Elektromagneten (126) auf dem Gegenkupplungsteil (120) angeordnet und über Schleifkontakte (128) mit der Steuerschaltung (150) verbunden sind.

36. Servolenkung nach Anspruch 33, dadurch gekennzeichnet, daß das Gegenkupplungsteil (120') als axial verschiebbare Friktionsscheibe (130) ausgebildet und die Sensorvorrichtung (114') von einer die Drehbewegung der Lenksäule (110) relativ zur Eingangswelle (111) des Lenkgetriebes in eine Axialverschiebung der Friktionsscheibe (130) umsetzende Umlenkeinheit (131,132) gebildet ist, die je nach Richtung der Relativverdrehung zwischen Lenksäule (110) und Eingangswelle (111) die Friktionsscheibe (130) in die eine oder andere Axialrichtung verschiebt und mit einer von der Größe der Relativbewegung abhängigen Anpreßkraft an eine der beiden Kupplungsscheiben (118,119) anlegt.

37. Servolenkung nach Anspruch 36, dadurch gekennzeichnet, daß die Umlenkeinheit einen Kugelgewindetrieb (131) mit großer Steigung aufweist.

38. Servolenkung nach Anspruch 37, dadurch gekennzeichnet, daß der Kugelgewindetrieb (131) zwei koaxiale, drehfest mit jeweils Lenksäule (110) und Eingangswelle (111) verbundene Getriebeteile (133,134) aufweist, die über Kugeln in Verbindung stehende Gewinde tragen, wobei die drehfeste Verbindung des einen Getriebeteils (134) mit der Lenksäule (110) oder Eingangswelle (111) eine Axialverschiebung zuläßt, daß mit dem axial verschieblichen Getriebeteil (134) und der Friktionsscheibe (130) jeweils eine Verschiebemuffe (136,137) mit in axialer Verschieberichtung starrer Kopplung drehbar verbunden ist und daß ein zweiarmiger Schwenkhebel (132), dessen Schwenkachse (138) quer zur Verschieberichtung von Getriebeteil (134) und Friktionsscheibe (130) ausgerichtet ist, mit seinen beiden Hebelenden in die Verschiebemuffen (136,137) eingreift.

39. Servolenkung nach einem der Ansprüche 33 - 37, dadurch gekennzeichnet, daß die Kupplungsscheiben (118,119) und das Gegenkupplungsteil (120;120') koaxial zueinander angeordnet und die beiden Kupplungsscheiben (118,119) über ein Umkehrgetriebe (117;117') gekoppelt sind.

40. Servolenkung nach Anspruch 39, dadurch gekennzeichnet, daß die eine Kupplungsscheibe (118) drehfest mit der Abtriebswelle (113) des Servomotors (116) verbunden ist und daß das Getriebe zwischen Gegenkupplungsteil (120') und Eingangswelle (111) des Lenkgetriebes als zweistufiges Vorgelege (121') ausgebildet ist.

41. Servolenkung nach Anspruch 39, dadurch gekennzeichnet, daß ein Zahnrad des Umkehrgetriebes (117) drehfest mit der Abtriebswelle (113) des Servomotors (116) verbunden ist und daß das Getriebe zwischen Gegenkupplungsteil (120) und Eingangswelle (111) des Lenkgetriebes als einstufiges Vorgelege (121) ausgebildet ist.

42. Servolenkung nach Anspruch 40 oder 41, dadurch gekennzeichnet, daß in der drehfesten Verbindung zur Abtriebswelle (113) des Servomotors (116) ein fliehkraftgesteuerter Freilauf (139) angeordnet ist, dessen Antriebswelle mit der Abtriebswelle (113) des Servomotors (116) und dessen Abtriebswelle mit der einen Kupplungsscheibe (118) bzw. dem Zahnrad des Umkehrgetriebes (117;117') jeweils drehfest verbunden ist.

43. Servolenkung nach Anspruch 32, dadurch gekennzeichnet, daß die Schlupfkupplung (112'') zwei in festem Axialabstand voneinander drehbar und axial verschiebbar angeordnete, starr miteinander verbundene Reibscheiben (181,182) und ein von dem Servomotor (116) angetriebenes Reibrad (183) aufweist, das einen zum lichten Axialabstand zwischen den beiden Reibscheiben (181,182) kleineren Durchmesser aufweist und mit zu den Reibscheiben (181,182) radial ausgebildeter Rotationsachse (134) zwischen den beiden Reibscheiben (181,182) angeordnet ist, und daß die Sensorvorrichtung (114'') von einer die Drehbewegung der Lenksäule (110) relativ zur Eingangswelle (111) des Lenkgetriebes in eine Axialverschiebung der Reibscheiben (181,182) umsetzende Umlenkeinheit (186,191) gebildet ist, die je nach Richtung der Relativverdrehung zwischen Lenksäule (110) und Eingangswelle (111) die Reibscheiben (181,182) in die eine oder andere Axialrichtung verschiebt und eine der Reibscheiben (181,182) mit einer von der Größe der Relativverdrehung abhängigen Anpreßkraft an das Reibrad (183) anpreßt.

44. Servolenkung nach Anspruch 43, dadurch gekennzeichnet, daß die Umlenkeinheit ein Planetengetriebe (186) mit Hohlrad (187), Sonnenrad (188) und Planetenräder (189,190) und einen Spindelantrieb (191) mit parallel zur Lenksäule (110) ausgerichteten Gewindespindeln (192,193) und eine auf den Gewindespindeln (192,193) verschraubbare Spindelmutter (194) aufweist, daß das Sonnenrad (188) mit der Lenksäule (110), das Hohlrad (187) mit der Eingangswelle (111) des Lenkgetriebes und die Planetenräder (189;190) mit den Gewindspindeln (192,193) jeweils drehfest verbunden sind und daß die Spindelmutter (194) drehbar und in Achsrichtung starr mit den Reibscheiben (181,182) verbunden ist.

45. Servolenkung nach Anspruch 43 oder 44, dadurch gekennzeichnet, daß zwischen den Reibscheiben (181,182) und der Eingangswelle (111) des Lenkgetriebes ein Vorgelege (121''), insbesondere in Form eines Planetengetriebes, angeordnet ist.

46. Servolenkung nach Anspruch 43 - 45, dadurch gekennzeichnet, daß zwischen dem Servomotor (116) und dem von diesen angetriebenen Reibrad (183) ein vorzugsweise fliehkraftgesteuerter Freilauf (139) angeordnet ist, dessen Antriebswelle mit der Abtriebeswelle (113) des Servomotors (116) drehfest verbunden ist und auf dessen Abtriebswelle (184) das Reibrad (183) drehfest sitzt.

47. Servolenkung nach einem der Ansprüche 36 - 46, dadurch gekennzeichnet, daß zwischen Lenksäule (110) und Eingangswelle (111) des Lenkgetriebes eine oberhalb einer vorgegebenen Fahrzeuggeschwindigkeit aktivierbare Zentriervorrichtung (160;160') zu deren starren Kopplung miteinander angeordnet ist.

48. Servolenkung nach Anspruch 47, dadurch gekennzeichnet, daß die Zentriervorrichtung (160) einen an der Lenksäule (110) radial vorstehenden Anschlagnocken (161), einen mit diesem zusammenwirkenden, auf der Eingangswelle (111) des Lenkgetriebes angeordneten Koppelgelenkmechanismus (162), der zwei zweiarmige Schwenkhebel (164,165) mit endseitig angeordneten, einander zugekehrten Anlagebacken (171,172) und zwei an den anlagebackenfernen Hebelenden angelenkte Koppeln (166,167) umfaßt, die mit ihrem hebelfernen Ende auf einem gemeinsamen Gelenkzapfen (168) drehbar gehalten sind, und einen Antrieb (163) zum Verschieben des Gelenkzapfens (168) in zwei Endpositionen aufweist, in deren einer Endposition die Anlagebacken (171,172) an dem Anschlagnocken (161) beidseitig anliegen und in deren anderer Endposition die Anlagebacken (171,172) einen vorgegebenen Abstand vom Anschlagnocken (161) einhalten.

49. Servolenkung nach Anspruch 48, dadurch gekennzeichnet, daß der Koppelgelenkmechanismus (162) derart ausgebildet ist, daß in der einen Endposition des Gelenkzapfens (168) mit Anlage der Anlagebacken (171,172) am Anschlagnocken (161) die beiden Koppeln (166,167) eine Totpunktlage einnehmen, in der eine über den Anschlagnocken (161) auf die Anlagebacken (171,172) ausgeübte Druckkraft eine in diese Endposition wirkende Verschiebekraft am Gelenkzapfen (168) erzeugt.

50. Servolenkung nach Anspruch 48 oder 49, dadurch gekennzeichnet, daß der Antrieb (163) eine elektromotrisch antreibbare Spindel (174) und eine auf der Spindel (174) verschraubbare Spindelmutter (175) umfaßt und daß der Gelenkzapfen (168) über eine Feder (169) mit der Spindelmutter (175) verbunden ist.

51. Servolenkung nach Anspruch 42 oder 46, dadurch gekennzeichnet, daß der Freilauf (139) einen mit seiner Antriebswelle drehfest umlaufenden Innenring (145) mit über den Umfang verteilt angeordneten Axialnuten (149), einen dazu koaxialen, mit seiner Abtriebswelle drehfest verbundenen Außenring (146) und zwischen Innen- und Außenring (145,146) sich abstützende Klemmkörper (147) aufweist, die in den Axialnuten (149) eine Innen- und Außenring (145,146) drehfest miteinander verbindende Klemmstellung einnehmen, solange der Innenring (145) schneller dreht als der Außenring (146) und in eine Innen- und Außenring (145,146) voneinander abkoppelnde Freilaufstellung übergehen, wenn der Außenring (146) schneller dreht als der Innenring (145), und daß zwischen Innen- und Außenring (145,146) ein fliehkraftgesteuerter Steuerkäfig (148) angeordnet ist, der bei Unterschreiten einer unteren Grenzdrehzahl des Innenrings (145) die Klemmkörper (147) aus ihrer Klemmstellung heraus in die Freilaufstellung verschiebt.

52. Servolenkung nach Anspruch 51, dadurch gekennzeichnet, daß am Innenring (145) Fliehgewichte (151) schwenkbar gelagert sind, die von einer Feder (154) nach innen gezogen werden und mit dem Steuerkäfig (148) zu dessen Verdrehung gekoppelt sind.

53. Servolenkung nach einem der Ansprüche 32 - 52, dadurch gekennzeichnet, daß die Kopplung von Lenksäule (110) und Eingangswelle (111) des Lenkgetriebes mittels eines Torsionsglieds, vorzugsweise Torsions- oder Drehstab (115), vorgenommen ist, das einerseits mit der Lenksäule (110) und andererseits mit der Eingangswelle (III) drehfest verbunden ist.

Fig. 1

Fig. 2

Fig. 3

Fig. 4

# Fig. 5

Fig. 6

Fig. 7

Fig. 8

Fig. 9

Fig. 10

Fig. 11

Fig. 12

EP 0 419 924 A1

Fig. 13

Fig. 14

Fig. 15

Fig. 16

# EUROPÄISCHER RECHERCHENBERICHT

EP 90117444.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>US - A - 4 784 234</u><br>(NAITO)<br> * Fig. 1; Zusammenfassung *<br>-- | | B 62 D 5/04 |
| A | <u>US - A - 4 809 173</u><br>(FUKAMI)<br> * Fig. 2; Zusammenfassung *<br>-- | | |
| A | <u>DE - A1 - 3 617 772</u><br>(HONDA)<br> * Fig. 1; Zusammenfassung *<br>-- | | |
| D,A | <u>DE - A1 - 3 824 424</u><br>(BOSCH)<br> * Fig. 1-4 *<br>---- | 1 | |

| RECHERCHIERTE SACHGEBIETE (Int Cl⁵) |
|---|
| B 62 D |

Der vorliegende Recherchenbericht wurde für alle Patentansprüche erstellt.

| Recherchenort<br>WIEN | Abschlußdatum der Recherche<br>13-12-1990 | Prüfer<br>PANGRATZ |
|---|---|---|